# EUROPÄISCHE PATENTSCHRIFT

(11) **EP 4 269 290 B1**
(45) Veröffentlichungstag und Bekanntmachung des Hinweises auf die Patenterteilung: **17.09.2025**
(21) Anmeldenummer: 22174868.4
(22) Anmeldetag: 23.05.2022
(51) Int. Cl.: B65G 17/00, B65G 35/06, B23Q 7/14

(54) **WERKSTÜCKTRÄGER**
WORKPIECE CARRIER
PORTE-PIÈCE

(30) Priorität: 25.04.2022 EP 22169811
(43) Veröffentlichungstag der Anmeldung: 01.11.2023
(73) Patentinhaber: Grob-Werke GmbH & Co. KG, 87719 Mindelheim (DE)
(72) Erfinder: Boll, Jürgen, 76133 Karlsruhe (DE)
(74) Vertreter: Wildschütte, Matthias Bernd

(56) Entgegenhaltungen:
- DE-A1- 2 209 609
- DE-A1- 2 615 598
- DE-C1- 19 630 429
- US-A1- 2007 029 166

## Beschreibung

Die Erfindung betrifft einen Werkstückträger für den Transport eines Werkstückes oder einer Ware in einer Förderanlage, umfassend zumindest eine Werkstückbasis, welche zur Aufnahme zumindest eines Werkstücks vorgesehen ist, wobei die Werkstückbasis eine Aufnahmefläche aufweist, auf welcher ein Werkstück anbringbar ist und die Werkstückbasis weiterhin eine Basisfläche aufweist, welche beabstandet zur Aufnahmefläche angeordnet ist. Der Werkstückträger umfasst weiterhin zumindest ein Auflageelement, welches im Betrieb des Werkstückträgers dazu vorgesehen ist, auf einem Förderelement einer Förderanlage mit Auflagefläche aufzuliegen, wobei das Auflageelement mit der Basisfläche der Werkstückbasis verbunden ist, wobei für den Werkstückträger eine erste Bewegungsrichtung vorgesehen ist, entlang welcher der Werkstückträger in einer Förderanlage bewegbar ist und eine Positionierungsebene definiert ist, welche senkrecht zur Auflagefläche und senkrecht zur ersten Bewegungsrichtung orientiert ist, wobei die Positionierungsebene die Aufnahmefläche schneidet und entlang der ersten Bewegungsrichtung in der Mitte der Länge des Werkstückträgers angeordnet ist und wobei das Auflageelement zumindest zwei Aussparungen aufweist, welche in einer Richtung senkrecht zur Auflagefläche versetzt zueinander angeordnet sind und wobei das Auflageelement zumindest zwei Vorsprünge aufweist, welche in einer Richtung senkrecht zur Auflagefläche ebenfalls versetzt zueinander angeordnet sind. Die Erfindung betrifft weiterhin eine Förderanlage zum Transport von Werkstücken sowie ein Verfahren zum Fügen mehrerer Werkstücke unter Verwendung einer Förderanlage.

In der Produktion oder Logistik werden Werkstückträger oder Ladungsträger verwendet um Werkstücke oder Waren zwischen unterschiedlichen Stationen zu transportieren. Üblicherweise werden solche Werkstückträger in größerer Anzahl in einer Förderanlage eingesetzt. Beispielsweise können Werkstückträger in einer Förderanlage eingesetzt werden, in der auf den Werkstückträgern befindliche Werkstücke an mehreren Stationen bearbeitet oder geprüft werden. Die Werkstücke können dabei an den verschiedenen Stationen entweder auf den Werkstückträgern verbleiben oder temporär von diesen abgenommen und bearbeitet werden. Generell sind in Förderanlagen Abläufe zu bevorzugen, in denen möglichst wenig Zeit für das Beladen und Entladen der Werkstücke benötigt wird, um einen hohen Durchsatz der Förderanlage zu ermöglichen.

Um eine temporäre Verbindung zwischen in der Förderanlage benachbart zueinander bewegten Werkstückträgern zu ermöglichen, existieren Werkstückträger, welche so gestaltet sind, dass sie bereichsweise ineinander geschoben werden können. Beispielsweise sind solche Werkstückträger in CN 205169255 U beschrieben. Jeder Werkstückträger weist einen Vorsprung auf, welche in eine entsprechend passende Aussparung in einem benachbarten Werkstückträger formschlüssig eingebracht werden kann. Bei entsprechender Positionierung benachbarter Werkstückträger zueinander, lassen diese sich somit formschlüssig zu einem Werkstückträgerverbund verbinden. In der Förderanlage können mehrere miteinander verbundene Werkstückträger gemeinsam transportiert werden oder die darauf befindlichen Werkstücke gemeinsam in einer Station bearbeitet werden. Anschließend können die Werkstückträger wieder voneinander getrennt werden.

Auch in US 6102194 A sind Werkstückträger beschrieben, die ineinander einschiebbar sind. Die ineinander einschiebbaren Bereiche der Werkstückträger sind dabei so gestaltet, dass diese beim Aufstauen mehrerer Werkstückträger als Bremse zusammenwirken, um den Aufprall der Werkstückträger aufeinander zu dämpfen.

In US 2007/0029166 A1, welche die Merkmale des Oberbegriffs des Anspruchs 1 aufweist, ist ein Transportsystem mit einer Vielzahl einander überlappender Förderlamellen beschrieben. Dieses Transportsystem kann zum Transport von Gepäckstücken, beispielsweise an einem Flughafen, verwendet werden. Die einzelnen Träger des Transportsystems sind dauerhaft, jedoch verdrehbar zueinander mit jeweils zwei benachbarten Trägern verbunden.

DE 196 30 429 C1 beschreibt ein Verfahren zum Fügen von Werkstücken durch Hochenergiestrahlung. Die Werkstücke weisen einen in einer Nut untergebrachten Schweißzusatzwerkstoff auf, der das Fügen der Werkstücke erleichtert. In dem Verfahren werden die Werkstücke in Berührung miteinander gebracht und in diesem Zustand durch Hochenergiestrahlung, beispielsweise Laserstrahlung, durch Schweißen gefügt.

Diese bekannten Werkstückträger sind kippstabil, da sie eine große Auflagefläche auf dem der Untergrund, beispielsweise auf einem Förderband aufweisen. Eine solche Kippstabilität wird insbesondere beim Transport und bei Verarbeitung von Werkstücken mit hohem Schwerpunkt benötigt. Nachteilig an den bekannten Werkstückträgern ist, dass diese beim Aufstauen, also in einem Zustand in dem sich in Förderrichtung benachbarte Werkstückträger gegenseitig berühren, relativ viel Platz benötigen. Auf diese Weise kann nur eine begrenzte Anzahl an Werkstückträgern in einer zur Verfügung stehenden Speicherstrecke zwischengespeichert werden. Ein solches Zwischenspeichern ist wichtig, um bei Störungen im Förderungs- oder Produktionsablauf einen zeitlichen Puffer zur Behebung von Störungen zur Verfügung zu haben, ohne den Transport oder die Produktion anhalten zu müssen. Weiterhin besteht bei den bekannten Werkstückträger an das Problem, dass aufgrund der großen Auflagefläche Werkstücke, die kleiner dimensioniert sind als die Auflageflächen, beim Transport oder beim Aufstauen einen großen Abstand zueinander aufweisen, was ein gemeinsames Bearbeiten im Verbund erschwert oder unmöglich macht.

Die Aufgabe der Erfindung besteht somit darin, Lösungen vorzuschlagen, mit denen Werkstücke oder Waren kippstabil transportiert werden können, wobei gleichzeitig eine dichtere Aneinanderreihung mehrere Werkstücke oder Waren möglich sein soll.

Diese Aufgabe wird gelöst durch einen Werkstückträger für den Transport eines Werkstückes oder einer Ware in einer Förderanlage, umfassend
- zumindest eine Werkstückbasis, welche zur Aufnahme zumindest eines Werkstücks vorgesehen ist, wobei die Werkstückbasis eine Aufnahmefläche aufweist, auf welcher ein Werkstück anbringbar ist und die Werkstückbasis weiterhin eine Basisfläche aufweist, welche beabstandet zur Aufnahmefläche angeordnet ist,
- zumindest ein Auflageelement, welches im Betrieb des Werkstückträgers dazu vorgesehen ist, auf einem Förderelement einer Förderanlage mit Auflagefläche aufzuliegen, wobei das Auflageelement mit der Basisfläche der Werkstückbasis verbunden ist,

wobei für den Werkstückträger eine erste Bewegungsrichtung vorgesehen ist, entlang welcher der Werkstückträger in einer Förderanlage bewegbar ist und eine Positionierungsebene definiert ist, welche senkrecht zur Auflagefläche und senkrecht zur ersten Bewegungsrichtung orientiert ist, wobei die Positionierungsebene die Aufnahmefläche schneidet und entlang der ersten Bewegungsrichtung in der Mitte der Länge des Werkstückträgers angeordnet ist und wobei das Auflageelement zumindest zwei Aussparungen aufweist, welche in einer Richtung senkrecht zur Auflagefläche versetzt zueinander angeordnet sind und wobei das Auflageelement zumindest zwei Vorsprünge aufweist, welche in einer Richtung senkrecht zur Auflagefläche versetzt zueinander angeordnet sind, wobei der in einer Richtung senkrecht zur Auflagefläche näher an der Werkstückbasis angeordnete Vorsprung eines Werkstückträgers in einer Richtung senkrecht zur Positionierungsebene in die in einer Richtung senkrecht zur Auflagefläche näher an der Werkstückbasis angeordnete Aussparung eines anderen Werkstückträgers einbringbar ist und der in einer Richtung senkrecht zur Auflagefläche näher an der Auflagefläche angeordnete Vorsprung eines Werkstückträgers in einer Richtung senkrecht zur Positionierungsebene in die in einer Richtung senkrecht zur Auflagefläche näher an der Auflagefläche angeordnete Aussparung eines anderen Werkstückträgers einbringbar ist,
wobei sich jede der Aussparungen zumindest bereichsweise auf zwei gegenüberliegenden Seiten der Positionierungsebene, insbesondere durch die Positionierungsebene hindurch, erstreckt.

Der erfindungsgemäße Werkstückträger ist dazu vorgesehen, zumindest ein Werkstück aufzunehmen und durch eine Förderanlage oder Produktionsanlage zu transportieren. Die Werkstückbasis des Werkstückträgers ist die Baugruppe, welche beim Transport ein Werkstück direkt aufnimmt. Dazu weist die Werkstückbasis eine Aufnahmefläche auf, auf der ein Werkstück abgelegt oder befestigt werden kann. Eine Basisfläche ist beabstandet zur Aufnahmefläche angeordnet und kann beispielsweise zur Verbindung mit anderen Baugruppen des Werkstückträgers verwendet werden. Die Aufnahmefläche kann unterschiedlich geformt sein. In einer einfachen Ausführungsform ist die Aufnahmefläche plan ausgeführt und weist in einer Draufsicht einen rechteckigen Querschnitt auf. Die Aufnahmefläche kann jedoch auch komplexer geformt sein und beispielsweise bereichsweise die Negativform eines aufzunehmenden Werkstückes aufweisen. Neben der Werkstückbasis umfasst der Werkstückträger zumindest ein Auflageelement, welches diejenige Baugruppe bildet, mit der der Werkstückträger im Betrieb auf einer Komponente einer Förderanlage aufliegt. Das Auflageelementes ist mit der Basisfläche der Werkstückbasis verbunden und liegt mit zumindest eine Auflagefläche im Betrieb auf einem Förderelement einer Förderanlage auf.

Zur genaueren Beschreibung des Werkstückträgers und des Zusammenspiels mehrerer Werkstückträger sind zwei Bewegungsrichtungen sowie eine Positionierungsebene definiert, welche als gedachte Hilfsgeometrie die Definition des Werkstückträgers erleichtern. Unter einer ersten Bewegungsrichtung ist eine Bewegungsrichtung zu verstehen, entlang der der Werkstückträger bevorzugt durch eine Förderanlage bewegt wird in dem Fall, in dem ein bereichsweises ineinander Einschieben mehrerer Werkstückträger erforderlich ist oder gewünscht wird. Werden mehrere Werkstückträger entlang der ersten Bewegungsrichtung bewegt, so kann ein Teilbereich eines ersten Werkstückträgers in einem Teilbereich eines zweiten Werkstückträgers eingebracht werden, wodurch ein platzsparendes Aufstauen oder Puffern mehrerer Werkstückträger möglich ist. Weiterhin ist eine zweite Bewegungsrichtung definiert, welche senkrecht zur ersten Bewegungsrichtung orientiert ist. Werden mehrere Werkstückträger entlang der zweiten Bewegungsrichtung durch eine Förderanlage transportiert, so ist beim erfindungsgemäßen Werkstückträger kein ineinander Einschieben benachbarter Werkstückträger möglich. Entlang der zweiten Bewegungsrichtung kann somit lediglich ein Aufstauen erfolgen, bei dem sich benachbarte Werkstückträger nicht überlappen. Entlang der zweiten Bewegungsrichtung können weniger Werkstückträger auf eine zur Verfügung stehenden Pufferstrecke zwischengespeichert werden. Vorteilhaft in der zweiten Bewegungsrichtung ist jedoch der größere Abstand benachbarter Werkstückträger und somit benachbarter Werkstücke zueinander, welcher bisweilen für bestimmte Bearbeitungsschritte benötigt wird. Weiterhin ist als Hilfsgeometrie eine Positionierungsebene definiert, welche senkrecht zur Auflagefläche des Werkstückträgers auf dem Förderelement orientiert ist. Bei einem horizontal ausgerichteten Förderelement ist die Positionierungsebene vertikal orientiert. Darüber hinaus ist die Positionierungsebene senkrecht zur ersten Bewegungsrichtung orientiert und schneidet die Aufnahmefläche. Schließlich ist die Positionierungsebene in Richtung der ersten Bewegungsrichtung in der Mitte der Gesamtlänge des Werkstückträgers angeordnet und halbiert den Werkstückträger somit gedacht in dieser Richtung. Bei einer Bewegung des Werkstückträgers entlang der ersten Bewegungsrichtung ist der Abstand zwischen zwei parallel zueinander orientierten Positionierungsebenen benachbarter Werkstückträger ein Maß, welches für den Abstand benachbarter Werkstücke zueinander herangezogen werden kann. Dieses Maß kann auch als Stichmaß bezeichnet werden und dient als Grundlage für logistische Berechnungen bezüglich Durchsatz und Produktionsmenge einer Förderanlage. Bevorzugt wird ein Werkstück auf der Aufnahmefläche so angeordnet, dass es parallel zur Positionierungsebene angeordnet ist und/oder die Mitte des Werkstückes in der ersten Bewegungsrichtung deckungsgleich zur Positionierungsebene angeordnet ist. Selbstverständlich ist es jedoch auch möglich, ein Werkstück oder auch mehrere Werkstücke auf der Aufnahmefläche anzubringen, wobei diese nicht parallel zur Positionierungsebene angeordnet sind.

Das Auflageelement des erfindungsgemäßen Werkstückträgers umfasst zwei Aussparungen, welche in einer Richtung senkrecht zur Auflagefläche versetzt zueinander angeordnet sind. Diese Aussparungen sind dazu vorgesehen, Vorsprünge eines benachbarten Werkstückträgers beim Aufstauen mehrerer Werkstückträger aufzunehmen. Somit umfasst das Auflageelement auch zwei Vorsprünge, welche in einer Richtung senkrecht zur Auflagefläche zueinander versetzt sind. Der Abstand der beiden Aussparungen zueinander entspricht dabei dem Abstand der beiden Vorsprünge zueinander. Sowohl die Aussparungen als auch die Vorsprünge können unterschiedliche Formen aufweisen, wobei jedoch stets eine Aussparung und ein Vorsprung so geformt sind, dass der Vorsprung in die entsprechende Aussparung eingebracht werden kann. Jede Aussparung ist in Richtung der ersten Bewegungsrichtung auf einer Seite offen ausgeführt, so dass aus dieser Richtung ein Vorsprung eines benachbarten Werkstückträgers eingebracht werden kann. Die beiden Aussparungen und die beiden Vorsprünge sind so am Werkstückträger angeordnet, dass der näher an der Werkstückbasis angeordnete Vorsprung eines Werkstückträgers entlang der ersten Bewegungsrichtung oder senkrecht zur Positionierungsebene in die näher an der Werkstückbasis angeordnete Aussparung eines zweiten Werkstückträgers einbringbar ist. Gleiches gilt für den näher an der Auflagefläche angeordneten Vorsprung und die näher an der Auflagefläche angeordnete Aussparung: der näher an der Auflagefläche angeordnete Vorsprung eines ersten Werkstückträgers ist in die näher an der Auflagefläche angeordnete Aussparung eines zweiten Werkstückträgers einbringbar. Beim Aufstauen zweier benachbarter Werkstückträger dringt somit der näher an der Werkstückbasis angeordnete Vorsprung eines Werkstückträgers in die näher an der Werkstückbasis angeordnete Aussparung eines benachbarten Werkstückträgers ein, gleichzeitig dringt der näher an der Auflagefläche angeordnete Vorsprung in die näher an der Auflagefläche angeordnete Aussparung eines benachbarten Werkstückträgers ein. Auf diese Weise überlappen sich im aufgestauten Zustand benachbarte Werkstückträger und können platzsparend, beispielsweise in einer Pufferstrecke, zwischengespeichert werden. Erfindungsgemäß ist somit je ein Vorsprung eines Werkstückträgers in eine Aussparung eines anderen, benachbarten Werkstückträgers in der ersten Bewegungsrichtung einbringbar. Darüber hinaus kann es jedoch auch möglich sein, dass ein solches Einbringen von jeweils einem Vorsprung in eine Aussparung in einer anderen Richtung als die ersten Bewegungsrichtung vorgesehen und geometrisch möglich ist. So kann beispielsweise ein einbringen jeweils eines Vorsprungs in eine Aussparung in einer Richtung erfolgen, welche parallel zur Auflagefläche verläuft und in einem spitzen Winkel zur ersten Bewegungsrichtung orientiert ist. Ein solches Aufstauen kann auch als ein Aufstauen schräg zur ersten Bewegungsrichtung bezeichnet werden. Ein solches schräges Aufstauen ist beispielsweise vorteilhaft, wenn die relative Bewegungsrichtung des Werkstückträgers in der Förderanlage geändert oder gedreht werden soll. Beispiele dafür sind in Zusammenhang mit optionalen Ausführungsformen der Erfindung beschrieben.

Erfindungsgemäß erstrecken sich beide Aussparungen eines Werkstückträgers zumindest bereichsweise auf beiden, einander gegenüberliegenden Seiten der Positionierungsebene. Somit sind die beiden Aussparungen entlang der ersten Bewegungsrichtung länger als die Hälfte der Länge des gesamten Werkstückträgers in dieser Richtung. Jede der Aussparungen erstreckt sich somit durch die in der Mitte der Aufnahmefläche angeordnete Positionierungsebene hindurch. Dementsprechend sind die beiden Vorsprünge ebenfalls so angeordnet, dass sie sich auf zwei gegenüberliegenden Seiten der Positionierungsebene entlang der ersten Bewegungsrichtung erstrecken. Dadurch dringt jeder Vorsprung beim Aufstauen benachbarter Werkstückträger um mehr als die Hälfte der Länge jedes Werkstückträgers in eine Aussparung eines benachbarten Werkstückträgers ein. Dadurch ist es möglich, die erfindungsgemäßen Werkstückträger sehr platzsparend entlang der ersten Bewegungsrichtung aufzustauen. Die auf die Auflagefläche oder Standfläche bezogene Pufferkapazität mehrerer erfindungsgemäßer Werkstückträger ist gegenüber bekannten Werkstückträgern signifikant erhöht. Besonders vorteilhaft an dem erfindungsgemäßen Werkstückträger ist, dass trotz der platzsparenden Aufstaubarkeit die Länge des Werkstückträgers entlang der ersten Bewegungsrichtung so groß gewählt werden kann, dass eine hohe Kippstabilität des Werkstückträgers in der Förderanlage erreicht wird. Diese Kippstabilität bewirkt wiederum, dass auch ein Werkstück mit einem hoch angeordneten Schwerpunkt stabil und sicher von einem Werkstückträger durch die Förderanlage transportiert werden kann. Zur Erzielung einer hohen Kippstabilität ist die Länge des Auflageelementes entlang der ersten Bewegungsrichtung bevorzugt signifikant größer als die Länge der Aufnahmefläche zur Aufnahme des Werkstücks. Beispielsweise kann die Länge des Auflageelementes um den Faktor 2, 3 oder 4 größer gewählt sein als die Länge der Auflagefläche. Eine derart große Gesamtlänge des Werkstückträgers bewirkt, dass dieser sehr kippstabil ist, insbesondere bei dynamischen Veränderungen wie Beschleunigen oder Abbremsen in der Förderanlage. Ein erfindungsgemäßer Werkstückträger ist besonders geeignet zur Aufnahme von schlanken, plattenförmigen Werkstücken, wie beispielsweise Zellen einer elektrischen Batterie. Durch das Einbringen der Vorsprünge in Aussparungen eines benachbarten Werkstückträgers können die Positionierungsebenen benachbarter Werkstückträger und somit benachbarter Werkstücke sehr eng zusammengeführt werden, wodurch sogar Fügeoperationen durchgeführt werden können, wobei die Werkstücke beim Fügen auf ihrem jeweiligen Werkstückträger verbleiben können. Insgesamt vereinfacht ein erfindungsgemäßer Werkstückträger somit den Transport eines Werkstückes durch eine Förderanlage und ermöglicht gegenüber dem Stand der Technik eine verbesserte Pufferung pro Fläche von Werkstücken. Dadurch werden der Durchsatz und die Zuverlässigkeit einer Förderanlage erhöht.

In einer Ausführungsform ist vorgesehen, dass sich jede der Aussparungen und jeder der Vorsprünge zumindest bereichsweise auf zwei gegenüberliegenden Seiten der Positionierungsebene erstrecken, wodurch bei einem Einbringen eines Vorsprungs eines ersten Werkstückträgers in eine Aussparung eines zweiten Werkstückträgers der erste und der zweite Werkstückträger so zueinander positionierbar sind, dass der Abstand zwischen deren Positionierungsebenen kleiner als die Hälfte der Länge eines Werkstückträgers in einer Richtung senkrecht zur Positionierungsebene ist. Der Abstand zwischen zwei Positionierungsebenen zweier benachbarter zueinander in einer Förderanlage angeordneter Werkstückträger kann auch als Stichmaß bezeichnet werden. Dadurch, dass sich sowohl beide Aussparungen als auch beide Vorsprünge auf beiden Seiten der Positionierungsebene erstrecken sind diese jeweils länger als die Hälfte der Gesamtlänge des Werkstückträgers in der ersten Bewegungsrichtung ausgeführt. Bei einem Ineinanderschieben oder Aufstauen zweier Werkstückträger in der ersten Bewegungsrichtung ist das Stichmaß zwischen den Werkstückträger und somit kleiner als die Hälfte der Gesamtlänge eines Werkstückträgers. Auf diese Weise ist das erzielbare, minimale Stichmaß im Verhältnis zur Gesamtlänge des Werkstückträgers gegenüber dem Stand der Technik deutlich verbessert und die Pufferkapazität pro zur Verfügung stehender Fläche ist deutlich größer als beim Stand der Technik. Dadurch, dass sich auch die beiden Vorsprünge auf beiden Seiten der Positionierungsebene erstrecken, werden Drehmomente, die durch den Schwerpunkt eines Werkstückes auf dem Werkstückträger erzeugt werden, wirkungsvoll in der ersten Bewegungsrichtung durch den Werkstückträger abgestützt. Der Werkstückträger ist daher sehr kippstabil und somit auch zum Transport von Werkstücken mit hohem Schwerpunkt und/oder bei hohen dynamischen Belastungen wie Beschleunigungen und Abbremsen geeignet.

In einer weiteren Ausführungsform ist vorgesehen, dass das Auflageelement zumindest zwei Führungselemente aufweist, welche jeweils zumindest zwei Führungspunkte umfassen, die in einer Richtung senkrecht zur ersten Bewegungsrichtung außen am Auflageelement angeordnet sind, wobei Verbindungslinien zwischen den Führungspunkten der Führungselemente senkrecht zur Positionierungsebene orientiert sind und in Richtung parallel zur Positionierungsebene voneinander beabstandet sind, wobei die Führungselemente im Betrieb des Werkstückträgers dazu vorgesehen sind, zumindest zeitweise oder bereichsweise an einer Führung einer Förderanlage anzuliegen. In dieser Ausführungsform sind am Auflageelement zumindest zwei Führungselemente angeordnet, die der Führung des Werkstückträgers in einer Förderanlage dienen. Die Führungselemente sind an Außenseiten des Werkstückträgers angeordnet, wobei sich diese Außenseiten in einer Richtung senkrecht zur ersten Bewegungsrichtung am Auflageelement gegenüberliegenden. Jedes Führungselement umfasst zumindest zwei Führungspunkte, welche durch eine gedachte Verbindungslinie miteinander verbunden werden können. Diese gedachte Verbindungslinie ist senkrecht zur Positionierungsebene oder parallel zur ersten Bewegungsrichtung orientiert, wobei die gedachten Verbindungslinien in einer Richtung senkrecht zur ersten Bewegungsrichtung parallel zueinander verlaufen und zueinander beanstandet sind. So ist es beispielsweise möglich, dass die zwei Führungselemente zusammen vier Führungspunkte aufweisen. Jedes Führungselement kann jedoch auch als tatsächliche, geometrische Linie zwischen den beiden Führungspunkten ausgebildet sein, was beispielsweise durch eine Richtung gewölbte Oberfläche realisiert werden kann. Darüber hinaus kann jedes Führungselement auch als Führungsfläche ausgebildet sein, welche senkrecht zur Auflagefläche und senkrecht zur Positionierungsebene ausgerichtet ist. Bei der Bewegung des Werkstückträgers durch eine Förderanlage liegen die beiden Führungselemente zumindest bereichsweise und zumindest zeitweise an einer Führung in der Förderanlage an. Dieses Anliegen kann dabei als Punktberührung, Linienberührung oder Flächenberührung erfolgen.

Geschickter Weise ist vorgesehen, dass Aufnahmefläche parallel zur Auflagefläche orientiert ist. Durch diese parallele Orientierung ist die Aufnahmefläche für das Werkstück auch parallel zu dem Untergrund ausgerichtet, auf welchem der Werkstückträger aufliegt. Diese Ausrichtung ist besonders günstig zur Durchführung bestimmter Arbeitsschritte am Werkstück und verhindert gleichzeitig ein Herunterrutschen des Werkstücks von Werkstückträger. Selbstverständlich kann die Aufnahmefläche auch geneigt zur Auflagefläche ausgeführt sein.

In einer weiteren Ausführungsform ist vorgesehen, dass das Auflagelement einen ersten Teilbereich und einen zweiten Teilbereich aufweist, welche in einer Richtung senkrecht zur Auflagefläche benachbart zueinander angeordnet und miteinander verbunden sind, wobei die beiden Teilbereiche im Wesentlichen eine identische Form und Größe aufweisen wobei die beiden Teilbereiche unterschiedlich relativ zur Positionierungsebene positioniert sind. In dieser Ausführungsform ist das Auflageelement zumindest zweiteilig ausgeführt. Die beiden Teilbereiche sind dabei benachbart zueinander angeordnet und miteinander verbunden. Benachbart bedeutet hier, dass die beiden Teilbereiche nicht direkt aneinander angrenzen müssen. Es ist auch möglich, dass ein Zwischenelement, beispielsweise eine oder mehrere Distanzscheiben, zwischen den Teilbereichen angeordnet sind. Die beiden Teilbereiche sind im Wesentlichen gleich geformt, jedoch in Bezug auf die Positionierungsebene unterschiedlich orientiert. So können die beiden Teilbereiche beispielsweise gespiegelt zueinander bezogen auf die Positionierungsebene angeordnet sein.

Des Weiteren ist vorgesehen, dass der erste Teilbereich mit der Werkstückbasis verbunden ist und der zweite Teilbereich mit dem ersten Teilbereich auf dessen der Werkstückbasis gegenüberliegenden Seite verbunden ist, wobei die Auflagefläche am zweiten Teilbereich auf dessen dem ersten Teilbereich gegenüberliegenden Seite angeordnet ist. Die Elemente oder Bauteile zweiter Teilbereich, erster Teilbereich und Werkstückbasis sind in einer Richtung senkrecht zur Auflagefläche übereinander angeordnet. Dabei können zwischen diesen Elementen oder Bauteilen auch weitere Bauteile, wie beispielsweise Distanzscheiben, angeordnet sein. Im Anwendungsfall ganz unten befindet sich die Auflagefläche, welche am zweiten Teilbereich angebracht ist. Darüber ist der erste Teilbereich befestigt und ganz oben, oberhalb des ersten Teilbereiches befindet sich die Werkstückbasis.

Geschickter Weise ist vorgesehen, dass zumindest eines der Führungselemente am ersten Teilbereich und zumindest eines der Führungselemente am zweiten Teilbereich angeordnet ist. Die Führungselemente sind einander gegenüberliegend in einer Richtung parallel zur Positionierungsebene an den Außenseiten des Auflageelementes angeordnet. In einer Ausführungsform, welche einen ersten und einen zweiten Teilbereich aufweist ist zumindest eines der Führungselement am ersten Teilbereich und zumindest ein weiteres Führungselement am zweiten Teilbereich angeordnet. Es ist auch möglich, dass an jedem der beiden Teilbereiche zumindest zwei Führungselemente angeordnet sind. Auf diese Weise sind auf jeder Außenseite des Auflageelementes zumindest zwei Führungselemente angeordnet, die in einer Richtung senkrecht zur Positionierungsebene voneinander beabstandet sind. Diese Ausführungsform mit zumindest vier Führungselement ist besonders günstig, da sie sehr wirkungsvoll eine ungewollte Drehung des Werkstückträgers in einer Förderanlage verhindert und somit eine stabile Ausrichtung des Werkstückträgers entlang der Führungsrichtung sicherstellt.

In einer Ausführungsform ist vorgesehen, dass eine erste Aussparung und ein erster Vorsprung am oder im ersten Teilbereich und eine zweite Aussparung und ein zweiter Vorsprung am oder im zweiten Teilbereich angeordnet sind. In dieser Ausführungsform ist jeweils eine Aussparung und jeweils ein Vorsprung an jedem der beiden Teilbereiche angeordnet. Auf diese Weise ist ein geführtes Ineinanderschieben zweier benachbarter Werkstückträger an der ersten Bewegungsrichtung besonders gut möglich.

Vorteilhafter Weise ist vorgesehen, dass jeder Teilbereich an einander gegenüberliegenden Enden in Richtung der Positionierungsebene jeweils ein Führungselement aufweist, welches senkrecht zur Positionierungsebene orientiert ist. In dieser Ausführungsform ist an den Außenseiten jedes der beiden Teilbereiche jeweils ein Führungselement angeordnet, welches als Führungsfläche ausgeführt ist. Dadurch ergibt sich in einer Förderanlage eine sehr stabile Führung des Werkstückträgers. Die Führungsflächen, die senkrecht zur Positionierungsebene orientiert sind, können auch durch Führungslinien ersetzt werden, welche ebenfalls senkrecht zur Positionierungsebene ausgerichtet sind.

Optional ist vorgesehen, dass das Auflageelement in Richtung der Positionierungsebene gleich lang oder länger als die Werkstückbasis ausgeführt ist. In dieser Ausführungsform steht das Auflageelement in Richtung der Positionierungsebene auf einer, bevorzugt auf beiden Seiten über die Werkstückbasis vor. Dadurch ergibt sich eine besonders gute Kippstabilität des Werkstückträgers in einer Richtung parallel zur Positionierungsebene. Alternativ können in einer Richtung parallel zur Positionierungsebene das Auflageelementes und die Werkstückbasis jedoch auch gleich lang ausgeführt sein. Weiterhin ist es möglich, dass in dieser Richtung die Werkstückbasis länger ausgeführt ist als das Auflageelemente.

In einer vorteilhaften Ausgestaltung ist vorgesehen, dass in einer Draufsicht auf die Auflagefläche die Außenkontur jedes Teilbereiches auf einer ersten Seite im Wesentlichen der Außenkontur des Teilbereiches auf einer zweiten, der ersten Seite gegenüber liegenden Seite entspricht, wobei die erste Seite der zweiten Seite in einer Richtung senkrecht zur Positionierungsebene gegenüberliegt. In dieser Ausführungsform sind einander gegenüberliegende Seiten jedes Teilbereiches gleich geformt. Durch diese Formgebung lässt sich ein Teilbereich eines ersten Werkstückträgers besonders einfach in einen Teilbereich eines zweiten Werkstückträgers einschieben. Beispielsweise können die Außenkonturen jedes Teilbereiches auf einer ersten Seite und auf einer zweiten Seite, welche sich in eine Richtung zur Positionierungsebene senkrecht gegenüberliegen, als Halbkreise geformt sein. Bei einem ineinander Einschieben zweier Teilbereiche benachbarter Werkstückträger liegt dann eine halbkreisförmig geformte Außenkontur an einer entsprechend formkomplementär geformten halbkreisförmigen Außenkontur eines weiteren Werkstückträgers an. Auf diese Weise können mehrere Werkstückträger besonders platzsparend ineinander eingeschoben werden.

Weiterhin ist vorgesehen, dass das Auflagelement in einer Draufsicht senkrecht auf die Auflagefläche symmetrisch zur Positionierungsebene ausgebildet ist. In dieser Ausführungsform bildet in einer Draufsicht die Positionierungsebene eine Mittelebene oder Symmetrieebene des Werkstückträgers. Gleichzeitig sind jedoch die beiden Teilbereiche in einer Richtung senkrecht zur Auflagefläche, also parallel zur Positionierungsebene zueinander versetzt. Die Symmetrie um die Positionierungsebene ist somit in einer zweidimensionalen Projektion des Werkstückträgers gegeben, jedoch nicht im dreidimensionalen Raum. In dieser Ausführungsform befindet sich die Positionierungsebene in der ersten Bewegungsrichtung in der Mitte jedes einzelnen, der beiden übereinander angeordneten Teilbereiche. Durch diese in einer Projektion um die Positionierungsebene symmetrische Form, welche gleichzeitig in einer Richtung senkrecht zur Auflagefläche durch zwei übereinander angeordnete Teilbereiche gebildet wird, wird ermöglicht, dass jeweils zwei gleich geformte Aussparungen und Vorsprünge an jedem Teilbereich angeordnet sind. Bei einem Aufstauen oder Zusammenführen zweier Werkstückträger in der ersten Bewegungsrichtung dringt so ein Vorsprung des ersten Werkstückträgers in eine Aussparung des zweiten Werkstückträgers sowie ein Vorsprung des zweiten Werkstückträgers in eine Aussparung des ersten Werkstückträgers ein. Auf diese Weise überlappen sich die Teilbereiche der benachbarten Werkstückträger über eine große Länge in der ersten Bewegungsrichtung, was ein platzsparendes Aufstauen mehrerer Werkstückträger erlaubt.

In einer weiteren Ausführungsform ist vorgesehen, dass in einer Draufsicht auf die Auflagefläche jeder Teilbereich achsensymmetrisch zu einer Achse ausgeführt ist, welche senkrecht zur Positionierungsebene orientiert ist. In dieser Ausführungsform ist jeder Teilbereich in einer Richtung parallel zur Positionierungsebene, das heißt um eine Achse, die senkrecht zur Positionierungsebene steht, symmetrisch ausgeführt. Durch diese Symmetrie können mehrere Werkstückträger auch entlang einer zweiten Bewegungsrichtung, welche senkrecht zur ersten Bewegungsrichtung orientiert ist besonders gut aufgestaut werden oder miteinander verkettet werden. Bevorzugt liegt die Symmetrieachse dabei in der Mitte der Länge des Auflageelementes in einer Richtung parallel zur Positionierungsebene. Selbstverständlich ist auch eine Kombination mehrerer der zuvor beschriebenen Ausführungsformen möglich. Beispielsweise kann das Auflageelement in einer Draufsicht auf die Auflagefläche symmetrisch zur Positionierungsebene ausgeführt sein und gleichzeitig können die beiden Teilbereiche jeweils achsensymmetrisch um eine Achse ausgeführt sein, welche senkrecht zur Positionierungsebene steht.

In einer weiteren Ausführungsform ist vorgesehen, dass in einer Draufsicht auf die Auflagefläche jeder Teilbereich V-förmig ausgebildet ist, insbesondere wobei die beiden Schenkel des V in einem Winkel zwischen 5° und 150° zueinander angeordnet sind, wobei die freien Enden des V an ihren Stirnseiten jeweils ein Führungselement aufweisen, wobei die Führungselemente der benachbart zueinander, übereinander angeordneten Teilbereiche an jedem Ende des Auflageelementes zueinander fluchten. In dieser Ausführungsform ist jeder der beiden Teilbereiche V-förmig gestaltet, wobei die beiden V in einer Draufsicht symmetrisch zur Positionierungsebene angeordnet sind. Der Winkel zwischen den beiden Schenkeln jedes V-förmig gestalteten Teilbereiches kann dabei zwischen 5° und 150° liegen. Bevorzugt sind die Winkel zwischen den beiden Schenkeln bei beiden Teilbereichen identisch. An den außen liegenden Stirnseiten, welche auch als freie Enden bezeichnet werden können, ist dabei jeweils ein Führungselement angeordnet. Als freie Enden werden die Enden der Teilbereiche bezeichnen, welche den Enden der Schenkel gegenüber liegen, die miteinander zu einem V verbunden sind. Um eine gute Führung in einer Förderanlage sicherzustellen, fluchten dabei die an den Stirnseiten angeordneten Führungselemente des ersten Teilbereiches mit den Führungselementen an den Stirnseiten des zweiten Teilbereiches. Bevorzugt sind die beiden V-förmig gestalteten Teilbereiche gegenläufig zueinander orientiert, das bedeutet das die Spitze des einen V in Richtung der ersten Bewegungsrichtung in die entgegengesetzte Richtung zeigt wie die Spitze des zweiten V.

In einer vorteilhaften Ausgestaltung ist vorgesehen, dass in einer Draufsicht auf die Auflagefläche jeder Teilbereich zumindest bereichsweise V-förmig ausgebildet ist, wobei eine Aussparung zwischen den Schenkeln des V angeordnet ist und ein Vorsprung durch die konvexe Außenseite der Spitze des V gebildet wird, wobei in einer Draufsicht auf die Auflagefläche jeder Teilbereich V-förmig ausgebildet ist, wobei die Spitzen des V der beiden Teilbereiche, welche dessen beiden Schenkel miteinander verbinden, auf einander gegenüberliegenden Seiten der Positionierungsebene angeordnet sind und die beiden Teilbereiche in einer Draufsicht symmetrisch zueinander um die Positionierungsebene angeordnet sind. In dieser Ausführungsform sind mehrere der zuvor einzelnen beschriebenen Ausführungsformen miteinander kombiniert. Das Auflageelement wird aus zwei V-förmigen Teilbereichen gebildet, welche übereinander angeordnet sind und in einer Draufsicht symmetrisch zur Positionierungsebene angeordnet sind. Das bedeutet, dass in einer Draufsicht eine Projektion des gesamten Auflageelementes symmetrisch zur Positionierungsebene geformt ist. Die beiden Aussparungen werden jeweils durch den Bereich zwischen zwei Schenkeln eines Teilbereiches gebildet. Die beiden Vorsprünge werden jeweils durch die konvexe Außenkontur eines V-förmig gestalteten Teilbereichs gebildet. Die konvexe Spitze eines der beiden Teilbereiche ist dabei auf einer ersten Seite der Positionierungsebene und die konvexe Spitze des zweiten der beiden Teilbereiche auf der gegenüberliegenden Seite der Positionierungsebene angeordnet. Diese Ausführungsform ermöglicht es, mehrere benachbarte Werkstückträger in der ersten Bewegungsrichtung weit ineinander einzuschieben und somit platzsparend aufzustauen. Gleichzeitig erstreckt sich die Auflagefläche des Auflageelementes, welche unten am zweiten Teilbereich angeordnet ist, um eine große Länge auf beiden Seiten der Positionierungsebene. Drehmomente, die von einem Werkstück auf den Werkstückträger übertragen werden, können so besonders gut abgestützt werden. Dadurch ist eine hohe Kippstabilität des Werkstückträgers in der ersten Bewegungsrichtung sichergestellt. Diese Ausführungsform kombiniert somit wirkungsvoll die Möglichkeit, mehrere Werkstückträger sehr dicht aufzustauen oder aneinander anreihen zu können mit einer hohen Kippstabilität jedes einzelnen Werkstückträgers.

In einer weiteren Ausführungsform ist vorgesehen, dass in einer Draufsicht auf die Auflagefläche jeder Teilbereich zumindest bereichsweise V-förmig ausgebildet ist, wobei die Außenflächen der Teilbereiche auf zwei einander senkrecht zur Positionierungsebene gegenüberliegenden Seiten zumindest bereichsweise plan ausgeführt sind, wobei die beiden Schenkel des V jeweils in einem Winkel zwischen 1° und 89°, bevorzugt im gleichen Winkel, zur Positionierungsebene orientiert sind. In dieser Ausführungsform sind die Außenflächen der beiden V-förmig gebildeten Teilbereiche plan ausgeführt und verlaufen in einer Draufsicht geradlinig. Dabei sind beide Außenkonturen, die einander in eine Richtung senkrecht zur Positionierungsebene gegenüber liegen, derart plan ausgeführt. Die Schenkel, sowie deren plan ausgeführte Bereiche der Außenflächen, sind bevorzugt in einem Winkel zwischen 1° und 89° zur Positionierungsebene orientiert. Als besonders günstig haben sich dabei Winkel zwischen 30° und 50° herausgestellt. Durch die im Winkel zur Positionierungsebene orientierten, planen Außenflächen der Schenkel ist es möglich, dass mehrere Werkstückträger in einer Richtung schräg zur ersten Bewegungsrichtung und zur zweiten Bewegungsrichtung ineinander eingeführt oder aufgestaut werden. Unter schräg ist dabei zu verstehen, dass diese Richtung in der gleichen Ebene verläuft wie die erste Bewegungsrichtung und die zweite Bewegungsrichtung, jedoch in einem von 0° und 90° unterschiedlichen Winkel zu diesen Bewegungsrichtungen orientiert ist. Bei einem solchen schrägen ineinander Einführen gleiten die planen Außenflächen eines Werkstückträgers entlang der planen Außenflächen eines anderen Werkstückträgers. Auf diese Weise wird eine Bewegung in einer schrägen Einführungsrichtung durch die Werkstückträger in eine Bewegung in der ersten Bewegungsrichtung übersetzt. In dieser Ausführungsform können Werkstückträger auch in einfacher Weise in ihrer Bewegungsrichtung durch eine Förderanlage geändert werden. Beispielsweise kann ein Umsetzen erfolgen, bei dem die Werkstückträger sich zunächst entlang der ersten Bewegungsrichtung bewegen und nach dem Umsetzen entlang der zweiten Bewegungsrichtung bewegen. Beispielsweise kann in einer Förderanlage zunächst ein Aufstauen mehrerer Werkstückträger entlang der ersten Bewegungsrichtung erfolgen. Ausgehend von diesem aufgestauten Zustand werden die Werkstückträger dann durch eine sich bewegende, im Winkel zur ersten Bewegungsrichtung angeordnete Schikane vereinzelt oder abgelenkt. Bei dieser Vereinzelung gleiten die planen Außenflächen benachbarter Werkstückträger aneinander. Nach dem Vereinzeln werden die Werkstückträger von einem Förderelement weiter bewegt, dessen Bewegungsrichtung in der zweiten Bewegungsrichtung ausgerichtet ist. Es ist somit möglich, durch das Vorsehen einer einfachen, beweglichen Schikane die Werkstückträger in der Förderanlage in ihrer Bewegungsrichtung zu variieren.

In einer weiteren Ausführungsform ist vorgesehen, dass ein Abstandselement vorgesehen ist, welches beweglich mit der Werkstückbasis verbunden ist, wobei das Abstandelement seitlich an der Werkstückbasis zwischen der Aufnahmefläche und dem ersten Teilbereich des Auflageelementes angeordnet ist und das Abstandselement zumindest eine Ausnehmung aufweist, welche in dessen der Werkstückbasis gegenüberliegenden Seite eingebracht ist und welche sich in einer Richtung senkrecht zur Positionierungsebene und parallel zur Aufnahmefläche erstreckt und zumindest ein Anschlag vorgesehen ist, welcher sich in einer Richtung senkrecht zur Positionierungsebene und parallel zur Aufnahmefläche erstreckt, wobei der Anschlag an der in einer Richtung senkrecht zur Positionierungsebene dem Abstandselement gegenüberliegenden Seite der Werkstückbasis befestigt ist und wobei der Anschlag zumindest bereichsweise eine Größe und Form aufweist, welche in die Ausnehmung des Abstandselementes passt, wobei in einer ersten Position des Abstandselementes relativ zur Werkstückbasis die Ausnehmung in einer Richtung senkrecht zur Positionierungsebene dem Anschlag gegenüberliegt und zu diesem fluchtet und in einer zweiten Position des Abstandselementes relativ zur Werkstückbasis die Ausnehmung in einer Richtung senkrecht zur Positionierungsebene dem Anschlag nicht gegenüberliegt und nicht zu diesem fluchtet. In dieser Ausführungsform umfasst der Werkstückträger in Abstandselement, welches dazu vorgesehen ist, den Abstand zwischen zwei Werkstückträgern, die in der ersten Bewegungsrichtung ineinander eingeschoben und zueinander benachbart sind, einzustellen. Durch das Abstandselement kann der Abstand zwischen zwei Positionierungsebenen benachbarter Werkstückträger verstellt werden. Dieser Abstand zweier benachbarter Positionierungsebene kann auch als Stichmaß bezeichnet werden. Das Abstandselement ist beweglich, insbesondere verschiebbar außen an der Werkstückbasis angeordnet. Das Abstandselement ist dementsprechend an der Werkstückbasis befestigt und gelagert. Das Abstandselement weist zumindest eine Ausnehmung auf, welche dazu vorgesehen ist mit einem Anschlag eines benachbarten Werkstückträgers zusammenzuwirken. Durch die Verschiebbarkeit des Abstandselementes ist es in einer Position des Abstandselementes möglich, den Anschlag eines benachbarten Werkstückträgers in die Ausnehmung des Abstandselementes einzuschieben.

In einer anderen, verschobenen Position des Abstandselementes ist dies jedoch nicht möglich, da die Ausnehmung eines Werkstückträgers nicht mit dem Anschlag eines benachbarten Werkstückträgers fluchtet. In diesem Fall liegt der Anschlag eines Werkstückträgers an der von der Werkstückbasis abgewandten Oberfläche des Abstandselementes an. Die unterschiedlichen Positionen des Abstandselementes bewirken somit unterschiedliche Stichmaße zwischen zwei benachbarten, aufgestauten Werkstückträgern. Entlang der ersten Bewegungsrichtung liegen sich das Abstandselement und der Vorsprung eines Werkstückträgers an der Werkstückbasis gegenüber. Es ist auch möglich, dass das Abstandselement zwei oder mehr Ausnehmungen aufweist und dementsprechend zwei oder mehr Anschläge auf der gegenüberliegenden Seite der Werkstückbasis angeordnet sind. Durch zumindest zwei Kombinationen aus Ausnehmungen und Anschlägen wird eine verbesserte Führung oder Ausrichtung benachbarter Werkstückträger im aufgestanden Zustand bewirkt. Die Ausnehmung und der Anschlag sind formkomplementär zueinander geformt, so dass sich der Anschlag in eine Ausnehmung einbringen lässt. Die Form von Anschlag und Ausnehmung in einer Richtung parallel zur ersten Bewegungsrichtung betrachtet, kann dabei unterschiedlich sein. Beispielsweise kann diese Form kreisförmig sein oder als Vieleck gestaltet sein.

In einer Ausführungsform ist vorgesehen, dass die Werkstückbasis die Form eines Quaders aufweist, wobei entweder das Abstandselement in einer Richtung parallel zur Positionierungsebene eine Gesamtlänge aufweist, die größer ist als die Gesamtlänge der Werkstückbasis, wodurch das Abstandselement in einer Richtung parallel zur Positionierungsebene über die Werkstückbasis vorsteht, oder an zumindest einem Ende in Richtung der Positionierungsebene eine Kavität angeordnet ist, welche die Werkstückbasis in einer Richtung senkrecht zur Positionierungsebene durchdringt und welche in Richtung der Positionierungsebene an der Stirnseite der als Quader ausgeführten Werkstückbasis geöffnet ist und das Abstandselement in einer Ansicht aus der ersten Bewegungsrichtung in zumindest eine an einer Stirnseite der Werkstückbasis angeordnete Kavität einsteht oder diese überlappt, wobei das Abstandselement durch Einbringen eines Gegenstandes, insbesondere eines Schwertes einer Förderanlage, in die Kavität in seiner Position relativ zur Werkstückbasis verschiebbar ist. In dieser Ausführungsform ist das Abstandselement so ausgeführt, dass es automatisch während des Transportes des Werkstückträgers in einer Förderanlage in seiner Position relativ zur Werkstückbasis verstellt werden kann. Dieses Verstellen wird dadurch ermöglicht, dass das Abstandselement von außerhalb des Werkstückträgers durch einen Gegenstand berührt und verschoben werden kann. Ein solcher Gegenstand kann beispielsweise ein Schwert sein, worunter ein Vorrichtungselement zu verstehen ist, welches in einer Förderanlage zugestellt werden kann, und im zugestellten Zustand einen Werkstückträger erreicht, welcher auf einem Förderelement bewegt wird. Um das Abstandselement durch einen Gegenstand gut erreichen und verschieben zu können, kann das Abstandselement in eine Richtung parallel zur Positionierungsebene über die Werkstückbasis vorstehen. An diesem vorstehenden Bereich des Abstandselementes kann dann ein Gegenstand von außen angreifen, wobei das Abstandselement durch dieses Angreifen relativ zur Werkstückbasis in seiner Position verschoben wird. Damit sichergestellt ist, dass das Abstandselement über die Werkstückbasis vorsteht, ist diese länger als die Gesamtlänge der Werkstückbasis parallel zur Positionierungsebene ausgeführt. Alternativ, in einem Fall in dem das Abstandselement nicht länger als die Gesamtlänge der Werkstückbasis ist, kann in der Werkstückbasis eine Kavität vorgesehen sein, welche als Freisparung zum Einführen oder Durchführen eines Gegenstandes, wie beispielsweise eines Schwertes, vorgesehen ist. Eine solche Kavität durchdringt eine Stirnseite der Werkstückbasis in eine Richtung senkrecht zur Positionierungsebene. Die Kavität ist so zum Abstandselement angeordnet, dass dieses, betrachtet aus der ersten Bewegungsrichtung, in die Kavität einsteht oder diese überlappt. Beim Einführen eines Gegenstandes in die Kavität wird somit diese einstehende Seite des Abstandselementes berührt, wodurch dieses in seiner Position verschoben wird. Bevorzugt sind zwei einander in eine Richtung parallel zur Positionierungsebene gegenüberliegende Kavitäten der Werkstückbasis eingebracht.

In einer alternativen Ausführungsform ist vorgesehen, dass das Abstandselement einen Abstandshalter und einen Verstellmechanismus umfasst, wobei der Verstellmechanismus mit zwischen dem Abstandshalter und der Werkstückbasis angeordnet ist, wobei die Position des Abstandshalters relativ zur Werkstückbasis in einer Richtung senkrecht zur Positionierungsebene und parallel zur Auflagefläche durch Betätigung des Verstellmechanismus verstellbar, insbesondere stufenlos verstellbar, ist. In dieser Ausführungsform umfasst das Abstandselement einen Verstellmechanismus, der einen Abstandshalter relativ zur Werkstückbasis bewegt. Der Verstellmechanismus kann dabei unterschiedlich ausgeführt sein. Beispielsweise kann der Verstellmechanismus als Magnetschalter oder Servomotor ausgeführt sein. Weiterhin kann eine elektronische Steuerung vorgesehen sein, welche, beispielsweise funkgesteuert, den Verstellmechanismus betätigt. Dadurch kann der Abstandshalter relativ zur Werkstückbasis bewegt werden, ohne dass ein Gegenstand von außen, beispielsweise ein Schwert, zugestellt werden muss. Bevorzugt weist der Abstandshalter eine plane Außenfläche ohne Ausnehmungen auf und ist stufenlos in seinem Abstand zur Werkstückbasis verstellbar. Auf diese Weise ist es möglich, das Stichmaß zwischen zwei aufgestauten Werkstückträger individuell und stufenlos zu verstellen.

Die Aufgabe der Erfindung wird weiterhin gelöst durch eine Förderanlage zum Transport von Werkstücken und/oder Waren umfassend
- ein Förderelement, welches dazu vorgesehen ist, mehrere Werkstückträger durch die Förderanlage zu bewegen und wobei das Förderelement durch einen Antrieb antreibbar ist,
- eine Führung, welche das Förderelement auf zwei einander gegenüberliegenden Seiten begrenzt und welche dazu vorgesehen ist, die Werkstückträger, welche vom Förderelement bewegt werden, zu führen, wobei die Führung an jedem Ort des Förderelementes eine Führungsrichtung vorgibt,
- zumindest zwei Werkstückträger nach einer der zuvor beschriebenen Ausführungsformen,
wobei die Auflagefläche jedes Werkstückträgers auf dem Förderelement aufliegt und zumindest eine Führungsfläche oder zumindest ein Teilbereich eines Vorsprungs zumindest zeitweise an der Führung anliegt.

Die erfindungsgemäße Förderanlage umfasst zumindest zwei erfindungsgemäße Werkstückträger nach einer der zuvor beschriebenen Ausführungsformen. Weiterhin umfasst die Förderanlage mehrere Bauteile oder Elemente bekannter Förderanlagen. Dazu gehört ein Förderelement, welches dazu vorgesehen ist, die Werkstückträger durch die Förderanlage zu transportieren. Das Förderelement kann beispielsweise als Förderband ausgeführt sein. Es können selbstverständlich auch mehrere Förderelemente vorgesehen sein, welche beispielsweise in unterschiedliche Richtungen in der Förderanlage bewegt werden. Weiterhin umfasst die Förderanlage eine Führung, welche oberhalb des Förderelementes angeordnet ist und dieses auf zwei einander gegenüberliegenden Seiten begrenzt. Die Führung kann als Bande ausgeführt sein und begrenzt den Weg, auf dem sich die Werkstückträger durch die Förderanlage bewegen sollen. Die Führung verläuft im Wesentlichen entlang der gesamten Länge des Förderelementes oder der Förderelemente. Die Führung gibt an jedem Ort entlang des Fördermenge eine Führungsrichtung vor. Dabei ist unter der Führungsrichtung die Richtung einer Tangente an die Führung zu verstehen. Die Führungsrichtung ändert sich, zumindest bereichsweise, entlang der Länge der Führung bzw. des Förderelementes. Die Werkstückträger liegen in der Förderanlage mit ihrer Auflagefläche auf dem Förderelement auf und werden von diesem bewegt. Die Führung der Förderanlage führt die Werkstückträger auf ihrem Weg durch die Förderanlage. Dazu liegt zumindest eines der Führungselemente des Werkstückträgers oder zumindest ein Teilbereich eines Vorsprungs des Werkstückträgers an der Führung zumindest zeitweise an. Unter zeitweise ist dabei zu verstehen, dass dieses Anliegen nicht zwingend während des gesamten Transportes des Werkstückträgers durch die Förderanlage vorliegen muss. Vielmehr schlägt das Führungselement oder der Vorsprung, insbesondere in Bereichen der Umlenkung oder Änderung der Bewegungsrichtung, an der Führung an. Es ist jedoch auch möglich, dass insbesondere bei geradlinig verlaufenden Bereichen des Förderelementes und der Führung nicht stets eine Berührung zwischen Führungselement oder Vorsprung mit der Führung vorliegt. Unter einem Teilbereich eines Vorsprung können unterschiedliche Teilbereiche zu verstehen sein. Beispielsweise können bei Ausführungsformen mit V-förmig gestalteten Teilbereichen, welche mit ihren konvexen Außenseiten Vorsprünge bilden, die Spitzen dieser V an der Führung zeitweise anliegen. Es ist jedoch auch möglich, dass Außenflächen der Schenkel des V zeitweise an der Führung anliegen. Ob während des Transportes der Werkstückträger durch die Förderanlage Führungselemente oder Vorsprünge an der Führung anliegen hängt davon ab, in welcher Orientierung der Positionierungsebene des Werkstückträgers zur Führung der Förderanlage die Werkstückträger bewegt wird. Das bedeutet, dass abhängig von der Bewegungsrichtung der Werkstückträger entweder die Führungselement der oder die Vorsprünge an der Führung anliegen.

In einer Ausführungsform der Förderanlage ist vorgesehen, dass die Werkstückträger mit ihrer Positionierungsebene parallel zur Führungsrichtung ausgerichtet sind und die zwei Führungselemente eines ersten Werkstückträgers an den zwei Führungselementen eines zweiten Werkstückträgers anliegen oder die Werkstückbasis eines ersten Werkstückträgers an der Werkstückbasis eines zweiten Werkstückträgers anliegt, wobei sich die beiden Werkstückträger nicht überlappen, wobei die beiden Vorsprünge beider Werkstückträger während des Transports durch die Förderanlage zumindest zeitweise an der Führung anliegen. In dieser Ausführungsform sind zumindest in einem Teilbereich der Förderanlage die Werkstückträger mit ihren Positionierungsebene parallel zur Führungsrichtung ausgerichtet. In dieser Orientierung können sich die Werkstückträger auch beim Aufstauen nicht überlappen oder ineinander eindringen. Bei einem Aufstauen mehrerer Werkstückträger liegt zumindest ein Führungselement eines ersten Werkstückträgers an zumindest einem Führungselement eines zweiten, benachbarten Werkstückträgers an. In dieser Orientierung der Positionierungsebene dienen die beiden Vorsprünge jedes Werkstückträgers der Führung des Werkstückträgers durch die Förderanlage und liegen zumindest zeitweise an der Führung an. Darüber hinaus können Teilbereiche des Auflageelementes benachbart zu den Aussparungen ebenfalls an der Führung der Förderanlage Anliegen, um den Werkstückträger entlang der Führungsrichtung stabil zu führen. In dieser Orientierung der Positionierungsebene können Seitenflächen der Werkstücke, welche auf den Werkstückträgers aufgebracht sind, in einfacher Weise bearbeitet werden.

In einer weiteren Ausführungsform ist vorgesehen, das die Werkstückträger mit ihrer Positionierungsebene senkrecht zur Führungsrichtung ausgerichtet sind und sich die Werkstückträger bereichsweise überlappen, wobei ein Vorsprung eines ersten Werkstückträgers in die Aussparung eines zweiten Werkstückträgers und ein Vorsprung des zweiten Werkstückträgers in eine Aussparung des ersten Werkstückträgers einsteht, wobei die Führungselemente jedes Werkstückträgers während des Transports durch die Förderanlage zumindest zeitweise an der Führung anliegen, insbesondere wobei der Anschlag des ersten Werkstückträgers am Abstandselement des zweiten Werkstückträgers anliegt. In dieser Ausführungsform sind die Positionierungsebenen senkrecht zur Führungsrichtung orientiert. In dieser Orientierung ist es möglich, dass sich mehrere Werkstückträger entlang der ersten Bewegungsrichtung ineinander einschieben oder überlappen. Es ist somit ein Aufstauen möglich, bei dem die Positionierungsebenen benachbarter Werkstückträger nur einen geringen Abstand zueinander aufweisen und sich auf benachbarten Werkstückträgern aufgebrachte Werkstücke sehr dicht aneinander anreihen lassen. In dieser Orientierung der Positionierungsebene dienen die Führungselemente der einzelnen Werkstückträger der Führung in der Förderanlage. In der senkrechten Orientierung der Positionierungsebenen zur Führungsrichtung lassen sich auf den Werkstückträger an aufgebrachte Werkstücke besonders gut miteinander verbinden oder fügen.

Vorteilhaft an der Förderanlage ist, dass die Werkstückträger sowohl eine Orientierung mit ihrer Positionierungsebene parallel als auch eine Orientierung mit ihrer Positionierungsebene senkrecht zur Führungsrichtung einnehmen können. Die Orientierung der Positionierungsebene kann auch innerhalb der Anlage verändert werden. Dadurch können unterschiedliche Bearbeitungsschritte in unterschiedlichen Orientierungen der Positionierungsebene zur Führungsrichtung vorgenommen werden. Dies ermöglicht eine komplexe Bearbeitung von Werkstücken innerhalb der Förderanlage. Zur Veränderung der Orientierung der Positionierungsebene können spezielle Stationen in der Förderanlage vorgesehen sein, beispielsweise eine Umsatzstation oder eine Drehstation, welche automatisch die Orientierung der Werkstückträger zum Förderelement bzw. zur Führung ändern.

Optional ist vorgesehen, dass zumindest ein Schwert vorgesehen ist, welches an oder in der Führung angeordnet ist und bedarfsweise von der Führung aus in Richtung des Förderelementes bewegbar ist, wobei das Schwert so positionierbar ist, dass es in die Kavität der Werkstückträger einbringbar ist, um die Position des Abstandselementes relativ zum Werkstückträger zu verschieben. In dieser Ausführungsform umfasst die Förderanlage zumindest ein Schwert, welches relativ zur Führung beweglich ausgeführt ist. Bedarfsweise, also in einem Fall in dem das Stichmaß der Werkstückträger zueinander verstellt werden soll, kann dieses Schwert in Richtung des Förderelementes auf die Werkstückträger zu bewegt oder zugestellt werden. In diesem zugestellten Zustand ist das Schwert dann so positioniert, dass es in eine Kavität in einem Werkstückträger eindringen kann. Dieses Eindringen erfolgt dabei während sich der Werkstückträger, angetrieben durch das Förderelement, vorbei am Schwert bewegt. Durch das Eindringen des Schwertes in die Kavität wird das Abstandselement des Werkstückträgers verschoben, wodurch sich beim nächsten Aufstauen mehrerer Werkstückträger das Stichmaß verändert. Es können auch mehrere Schwerter in der Förderanlage vorgesehen sein. Alternativ ist es möglich, dass das Schwert nicht in eine Kavität im Werkstückträger eindringet, sondern einen vorstehenden Bereich des Abstandselementes berührt und dieses auf diese Weise verschiebt.

Die beschriebene Förderanlage ist geeignet zur Durchführung eines Verfahren zum Beladen mehrerer Werkstückträger mit Werkstücken unter Verwendung einer Förderanlage nach einer der zuvor beschriebenen Ausführungsformen umfassend die Schritte
A) Aufstauen mehrerer Werkstückträger an einer Beladungsstelle am oder im Förderelement, wobei die Positionierungsebenen der Werkstückträger zum Aufstauen senkrecht zur Führungsrichtung orientiert sind und sich die Werkstückträger gegenseitig überlappen,
B) Aufbringen von Werkstücken auf die Werkstückträger, wobei die Werkstücke im Zustand der Anlieferung einen Mittenabstand zueinander aufweisen, welcher dem Abstand zweier Positionierungsebenen benachbarter Werkstückträger entspricht, wobei eine Mehrzahl an Werkstücken gleichzeitig auf eine Mehrzahl an Werkstückträgern aufgebracht wird und jedes Werkstück auf einen Werkstückträger aufgebracht wird und
C) Auflösen des aufgestauten Zustandes der Werkstückträger durch Bewegung der Werkstückträger auf dem Förderelement.

Dieses Verfahren dient dazu, eine Vielzahl von Werkstücken gleichzeitig auf eine Vielzahl von Werkstückträger aufzubringen. Aus dem Stand der Technik ist bekannt, an einer Beladestation ein Werkstück nach dem anderen jeweils einzelnen auf einen Werkstückträger aufzubringen. Dieses Verfahren zur Beladung ist zeitaufwendig und reduziert somit den Durchsatz der Förderanlage. Das beschriebene Verfahren ermöglicht es, mehrere Werkstücke gleichzeitig in die Förderanlage einzubringen. Dies ist beispielsweise in einem Fall nützlich, in dem mehrere Werkstücke in einer Verpackungseinheit zusammen angeliefert werden, welche dann als Gesamtheit in einem Schritt in die Förderanlage eingebracht werden können. Das beschriebene Verfahren wird bevorzugt in der Reihenfolge der Verfahrensschritte A) bis C) durchgeführt. Dazu werden in einem ersten Verfahrensschritt A) mehrere Werkstückträger an einer Beladungsstelle aufgestaut, wobei die Positionierungsebenen der Werkstückträger senkrecht zur Führungsrichtung orientiert sind und der Abstand zwischen den Positionierungsebenen dem Mittenabstand der Werkstücke entspricht, die gemeinsam auf mehrere Werkstückträger aufgebracht werden sollen. In diesem aufgestauten Zustand werden die Werkstückträger dann kurzfristig angehalten und nicht weiter durch das Förderelement bewegt. In einem zweiten Verfahrensschritt B) werden die Werkstücke dann im Zustand der Anlieferung gleichzeitig auf die aufgestauten, ruhenden Werkstückträger aufgebracht, wobei jeweils ein Werkstück auf je einen Werkstückträger aufgebracht wird. Somit können in einem einzigen Schritt mehrere Werkstückträger mit einem Werkstück beladen werden. Nach dem Aufbringen der Werkstücke werden die beladenen Werkstückträger in der Förderanlage weiterbewegt. Bei dieser Weiterbewegung wird in einem weiteren Verfahrensschritt C) der aufgestaute Zustand aufgelöst, wobei der Abstand zwischen den Positionierungsebenen benachbarter Werkstückträger vergrößert wird. In diesem aufgelösten Zustand, sind die Werkstücke auf den einzelnen Werkstückträger gut für Bearbeitungsschritte zu erreichen. Optional können nach den beschriebenen Verfahrensschritten A) bis C) in einem weiteren Verfahrenschritt D) die Werkstückträger relativ zur Führungsrichtung in der Förderanlage gedreht werden. Nach dieser Drehung sind die Positionierungsebenen der Werkstückträger dann parallel zur Führungsrichtung orientiert. Auf diese Weise sind nun die Seiten der Werkstücke, welche beim Beladen senkrecht zur Führungsrichtung orientiert waren, parallel zur Führungsrichtung orientiert. Auf diese Weise können diese Seiten der Werkstücke nun von außerhalb des Förderelementes gut erreicht und bearbeitet werden. Nach dieser Bearbeitung der Seitenflächen ist es selbstverständlich möglich, die Werkstückträger erneut zu drehen, so dass deren Positionierungsebenen wieder senkrecht zur Führungsrichtung orientiert sind. Dadurch, dass sich die Werkstückträger sehr dicht aneinanderreihen lassen, so dass das Stichmaß zwischen benachbarten Werkstückträger klein ist, kann in dem beschriebenen Verfahren die gleichzeitige Beladung mehrerer Werkstücke auf mehrerer Werkstückträger auch bei Werkstücken erfolgen, welche sehr schlank ausgeführt sind und einen geringen Mittenabstand zueinander im Anlieferungszustand aufweisen. Das beschriebene Verfahren kann mit dem im folgenden beschriebenen Verfahren ergänzt werden. Weiterhin kann das beschriebene Verfahren in umgekehrter Reihenfolge der Verfahrensschritte zum Entladen mehrerer Werkstücke gleichzeitig aus einer Förderanlage eingesetzt werden.

Die Aufgabe der Erfindung wird schließlich gelöst durch ein Verfahren zum Fügen mehrerer Werkstücke unter Verwendung einer Förderanlage nach einer der zuvor beschriebenen Ausführungsformen umfassend die Schritte
A) Aufstauen mehrerer Werkstückträger, wobei die Positionierungsebenen der Werkstückträger zum Aufstauen senkrecht zur Führungsrichtung orientiert sind und sich die Werkstückträger gegenseitig überlappen und sich der Anschlag und das Abstandselement benachbarter Werkstückträger berühren oder Vereinzeln mehrerer Werkstückträger (1), wobei benachbarte Werkstückträger (1) einen Abstand zueinander aufweisen und die Positionierungsebenen (PE) senkrecht oder parallel zur Führungsrichtung orientiert sind,
B) Aufbringen von Fügematerial zumindest bereichsweise zumindest auf einem Werkstück,
C) Zusammenschieben der Werkstückträger, wobei die Abstandselemente der Werkstückträger derart verstellt werden, dass die Anschläge mit den Ausnehmungen der Werkstückträger fluchten, so dass sich die Werkstücke über das Fügematerial berühren und dadurch gefügt werden, insbesondere wobei die Ladungsträger zur Durchführung von Verfahrensschritt B) und/oder Verfahrensschritt C) vom Förderelement abgehoben werden.

Das erfindungsgemäße Verfahren dient dazu, mehrere Werkstücke, welche jeweils auf einem Werkstückträger aufgebracht sind, zu fügen. Unter Fügen ist dabei generell die Berührung von mindestens zwei benachbarten Werkstücken oder ein dauerhaftes Verbinden der Werkstücke miteinander zu verstehen. Das Fügen kann beispielsweise durch Verkleben der Werkstücke miteinander erfolgen. Dabei wird eine stoffschlüssige Verbindung zwischen den Werkstücken hergestellt. Alternativ kann Fügen auch das Herstellen einer form- oder kraftschlüssigen Verbindung bedeuten. Beispielsweise können die Werkstücke Verbindungselemente aufweisen, welche beim Fügen ineinander eingeführt und somit fixiert werden. Dies kann beispielsweise dadurch erfolgen, dass ein Werkstück Buchsen aufweist, in welche vorstehende Stifte eines benachbarten Werkstückes form- und/oder krafschlüssig eingebracht werden. Zur Durchführung des erfindungsgemäßen Verfahrens wird eine Förderanlage verwendet. Das Verfahren wird bevorzugt in der beschriebenen Reihenfolge der Verfahrensschritte A) bis C) durchgeführt.

In einem ersten Verfahrensschritt A) können mehrere Werkstückträger, welche mit ihren Positionierungsebenen senkrecht zur Führungsrichtung orientiert sind, aufgestaut werden. Dieses Aufstauen kann an verschiedenen Stellen entlang des Förderelementes erfolgen. Bei diesem Aufstauen sind die Abstandselemente der Werkstückträger bevorzugt so orientiert, dass ein Anschlag eines benachbarten Werkstückträgers nicht in die Ausnehmung im Abstandselement eindringen kann. Auf diese Weise wird ein größeres Stichmaß zwischen benachbarten Werkstückträgers hergestellt. Alternativ kann das Verfahren auch mit einem Verfahrensschritt A) begonnen werden, in dem die Werkstückträger vereinzelt, also nicht aufgestaut vorliegen. Diesem vereinzelten Zustand können die Positionierungsebenen entweder senkrecht oder parallel zur Führungsrichtung orientiert sein. Der Verfahrensschritt A) stellt den Ausgangspunkt zum folgenden Verfahrensschritt B) dar.

In einem zweiten Verfahrensschritt B) wird Fügematerial zumindest bereichsweise zumindest auf einem Werkstück aufgebracht. Bei einem solchen Fügematerial kann es sich beispielsweise um einen Klebstoff oder eine Klebefolie handeln. In einem Fall, in dem die Werkstücke bereits in Verfahrensschritt A) bereits mit einem Fügeelement, wie beispielsweise einer Steckverbindung, einer Buchse, eines Stiftes oder Ähnlichem versehen sind, welche zur Herstellung einer kraft- ond/ oder formschlüssigen Verbindung vorgesehen sind, kann der Verfahrensschritt B) auch weggelassen werden. Das Aufbringen von Fügematerial kann je nach Orientierung der Positionierungsebenen der Werkstückträger von unterschiedlichen Positionen in der Förderanlage aus erfolgen. Bei einer senkrechten Orientierung der Positionierungsebenen zur Führungsrichtung können Vorrichtungen vorgesehen sein, welche das Fügematerial zwischen benachbarte Werkstückträger und somit Werkstücke einbringen. Bei einer Orientierung der Positionierungsebene parallel zur Führungsrichtung kann das Fügematerial seitlich, aus einer Richtung senkrecht zur Führungsrichtung, aufgebracht werden. In diesem Fall, in dem die Positionierungsebene beim Aufbringen des Fügematerials parallel zur Führungsrichtung orientiert sind, erfolgt anschließend eine Drehung der Werkstückträger, so dass deren Positionierungsebenen zum Abschluss von Verfahrensschritt B) senkrecht zur Führungsrichtung orientiert sind.

In einem dritten Verfahrensschritt C) werden die Werkstückträger mit den darauf aufgebrachten Werkstücken, welche mit Fügematerial versehen sind, zusammengeschoben. Bei diesem Zusammenschieben gerät ein Werkstück in Kontakt mit dem Fügematerial des benachbarten Werkstückes, wodurch die Werkstücke miteinander in verbunden oder gefügt werden. Um das Zusammenschieben benachbarter Werkstückträger zu ermöglichen, werden zunächst die Abstandselemente der Werkstückträger derart verstellt, dass die Anschläge eines benachbarten Werkstückträgers in die Ausnehmungen im Abstandselement eindringen können. Auf diese Weise wird das Stichmaß zwischen benachbarten Werkstückträgern und somit zwischen benachbarten Werkstücken reduziert. Diese Reduzierung des Stichmaßes bewirkt wiederum, dass sich die Werkstücke gegenseitig soweit annähern können, dass eine Berührung des aufgebrachten Flügematerials erfolgt. Durch die Berührung des Fügematerials werden die Werkstücke miteinander gefügt. Es kann vorgesehen sein, dass die Werkstücke in dem zusammengeschobenen Zustand über einen gewissen Zeitraum verbleiben, währenddessen das Fügematerial aushärtet oder abbindet und eine feste Verbindung zwischen den benachbarten Werkstücken hergestellt wird. Nachdem eine ausreichende Festigkeit beim Fügen der Werkstücke erreicht ist, können diese in der Förderanlage weiterbearbeitet werden oder aus der Förderanlage entnommen werden.

Insbesondere im Verfahrensschritt C) müssen die Werkstückträger und die darauf aufgebrachten Werkstücke sehr positionsgenau zueinander ausgerichtet sein. Eine solche Positionsgenauigkeit ist bisweilen nicht gegeben, wenn sich die Werkstückträger auf einem Förderelement, wie beispielsweise einem Förderband, befinden. Auch bei dem Transport auf einem Föderelement bewegen sich die Werkstückträger relativ zueinander, was sich störend auf ein positionsgenaues Fügen Auswirken kann. Aus diesem Grund ist optional vorgesehen, dass der Verfahrensschritt C) in einem Zustand durchgeführt wird, in dem die Werkstückträger vom Förderelement abgehoben werden. Die Werkstückträger können beispielsweise auf eine präzise Fügeplatte aufgelegt und dort zusammengeschoben werden. Dadurch wird die Positionsgenauigkeit der Werkstückträger und damit der Werkstücke zueinander verbessert. Nach dem Zusammenschieben können die Werkstückträger dann wieder zurück auf das Förderelement geführt werden, auf dem sie sich weiter durch die Förderanlage bewegen. Optional kann auch der Verfahrensschritt B) des Aufbringens von Fügematerial in einem Zustand erfolgen, indem die Werkstückträger zwischenzeitlich vom Förderelement abgehoben sind, um die Positionsgenauigkeit des Aufbringens des Fügematerials zu verbessern.

Das erfindungsgemäße Verfahren hat den Vorteil, dass das Fügen mehrerer Werkstücke während des Durchlaufs durch eine Förderanlage erfolgen kann. Das Fügen erfolgt somit automatisch und das erfindungsgemäße Verfahren weist einen hohen Durchsatz an Werkstücken bzw. miteinander gefügten Werkstücken auf. Die Verwendung der erfindungsgemäßen Werkstückträger, welche sehr dicht aneinanderreihbar sind, ermöglicht es, die Werkstückträger mit den Werkstücken während des Transports durch die Förderanlage so nahe zueinander zu positionieren, dass das Fügen während des Transports erfolgen kann. Gleichzeitig sind die Werkstückträger so kippstabil, dass die auftretenden Fügekräfte beim Zusammenschieben über das Auflageelement abgestützt werden. Das erfindungsgemäße Verfahren ermöglicht somit einen stabilen Fügeprozess bei einem gleichzeitigen hohen Durchsatz an Werkstücken.

Optional ist vorgesehen, dass die Werkstücke nach Beendigung von Verfahrensschritt C) als gefügter Block gemeinsam aus der Förderanlage entnommen werden. In dieser Ausführungsform werden mehrere Werkstücke, die zuvor als einzelne Werkstücke in die Förderanlage eingebracht wurden, als ein einziger, gefügter Block aus der Förderanlage entnommen. Unter Block ist dabei die Gesamtheit mehrerer Werkstücke zu verstehen, welche miteinander in Kontakt sind oder über Fügematerial miteinander verbunden sind. Bevorzugt erfolgt diese Entnahme als Block an einer Entladestelle in oder an dem Förderelement.

In einer weiteren Ausführungsform ist vorgesehen, dass nach der Entnahme mehrerer Werkstücke als gefügter Block der aufgestaute Zustand der Werkstückträger durch Bewegung der Werkstückträger auf dem Förderlement aufgelöst wird und das Abstandselement jedes Werkstückträgers zurückgestellt wird, so dass die Anschläge nicht mit den Ausnehmungen in den Abstandselementen der Werkstückträger fluchten. In dieser Ausführungsform wird nach der Entnahme der gefügten Werkstücke wieder ein Zustand hergestellt, in dem bei einem Aufstauen mehrerer Werkstückträger in der ersten Bewegungsrichtung wieder ein vergrößertes Stichmaß vorliegt. Dazu wird nach der Entnahme der Werkstückträger jedes Abstandselement in eine Position verschoben, in der ein Einführen des Anschlages eines benachbarten Werkstückträgers in die Ausnehmung im Abstandselement nicht mehr möglich ist. Werden ausgehend von diesem neu hergestellten Zustand anschließend mehrere Werkstückträger wieder aufgestaut, so schlägt der Anschlag eines Werkstückträgers an der Oberfläche des Abstandselementes eines benachbarten Werkstückträgers an, wodurch das Stichmaß größer ist als in Verfahrensschritt C) beim Zusammenschieben der Werkstückträger beim Fügen. Durch diese Vergrößerung des Stichmaßes ist wieder der Ausgangszustand des Verfahrens vor Verfahrensschritt A) hergestellt und das Verfahren kann in der Förderanlage erneut zum Fügen weiterer Werkstücke verwendet werden.

Merkmale, Wirkungen und Vorteile, welche in Zusammenhang mit dem Werkstückträger und der Förderanlage offenbart sind, gelten auch in Zusammenhang mit dem Verfahren als offenbart. Gleiches gilt in umgekehrter Richtung, Merkmale, Wirkungen und Vorteile welche in Zusammenhang mit dem Verfahren offenbart sind, gelten auch im Zusammenhang mit dem Werkstückträger und der Förderanlage als offenbart.

In den Figuren sind Ausführungsformen der Erfindung schematisch dargestellt. Dabei zeigen
- Fig. 1: eine perspektivische Ansicht eines Werkstückträgers nach einer Ausführungsform der Erfindung,
- Fig. 2: eine Vorderansicht in Richtung einer ersten Bewegungsrichtung auf einen Werkstückträger gemäß der in Fig. 1 dargestellten Ausführungsform,
- Fig. 3: eine perspektivische Ansicht auf zwei Werkstückträger nach der in Fig. 1 dargestellten Ausführungsform im aufgestauten Zustand entlang der ersten Bewegungsrichtung,
- Fig. 4: eine perspektivische Ansicht auf zwei Werkstückträger nach der in Fig. 1 dargestellten Ausführungsform im aufgestauten Zustand entlang einer zweiten Bewegungsrichtung,
- Fig. 5: eine Draufsicht auf zwei Werkstückträger nach der in Fig. 1 dargestellten Ausführungsform im aufgestauten Zustand entlang der ersten Bewegungsrichtung mit einem ersten Stichmaß,
- Fig. 6: eine Seitenansicht auf die in Fig. 5 dargestellten Werkstückträger,
- Fig. 7: eine Draufsicht auf zwei Werkstückträger nach der in Fig. 1 dargestellten Ausführungsform im aufgestauten Zustand entlang der ersten Bewegungsrichtung mit einem zweiten, verkleinerten Stichmaß,
- Fig. 8: eine Seitenansicht auf die in Fig. 7 dargestellten Werkstückträger,
- Fig. 9: eine Draufsicht auf zwei Werkstückträger nach der in Fig. 1 dargestellten Ausführungsform beim Aufstauen aus einer schrägen Bewegungsrichtung.

In den Figuren sind gleiche Elemente mit gleichen Bezugszeichen versehen. Im Allgemeinen gelten die beschriebenen Eigenschaften eines Elementes, welche zu einer Figur beschrieben sind, auch für die anderen Figuren. Richtungsangaben wie oben oder unten beziehen sich auf die beschriebene Figur und sind sinngemäß auf andere Figuren zu übertragen.

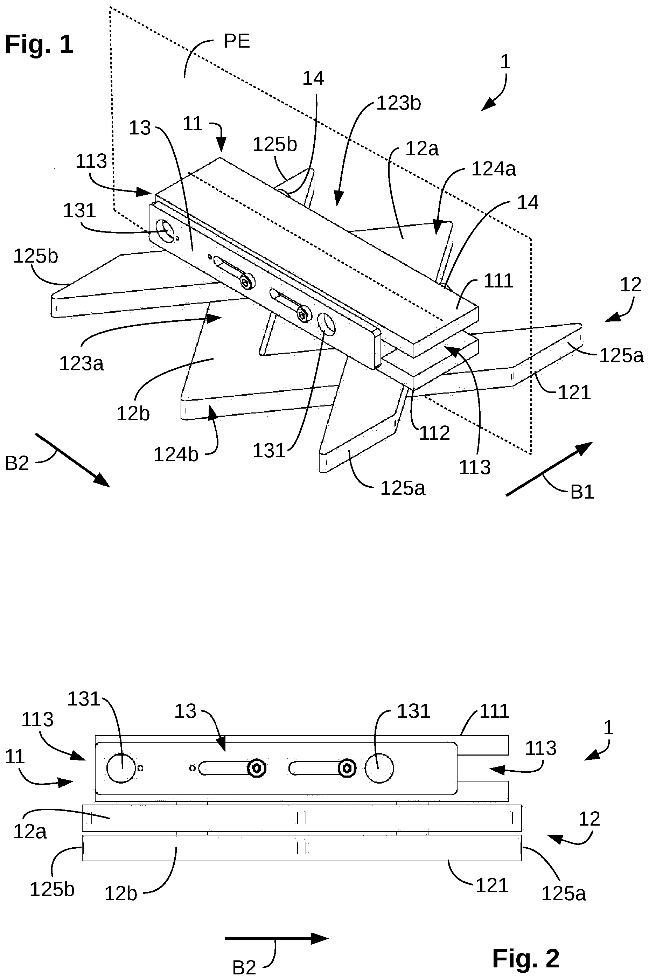

Fig. 1 zeigt eine perspektivische Ansicht eines Werkstückträgers 1 nach einer Ausführungsform der Erfindung. Der Werkstückträger 1 umfasst eine in der Darstellung oben dargestellte Werkstückbasis 11 sowie ein unten dargestelltes Auflageelement 12. Seitlich, in der Darstellung nach vorne links weisend, ist an der Werkstückbasis 11 in der dargestellten Ausführungsform ein Abstandselement 13 angeordnet, welches in seiner relativen Position zur Werkstückbasis 11 verschiebbar ausgeführt ist. Die Werkstückbasis 11 und das Auflageelement 12 sind fest miteinander verbunden.

Die Werkstückbasis 11 ist zur Aufnahme zumindest eines Werkstücks auf dem Werkstückträger 1 vorgesehen. Dazu umfasst die Werkstückbasis 11 eine in der Darstellung nach oben orientierte Aufnahmefläche 111. In der dargestellten Ausführungsform ist die Aufnahmefläche 111 rechteckig und plan ausgeführt. Auf der der Aufnahmefläche 111 gegenüberliegenden Seite der Werkstückbasis ist eine Basisfläche 112 vorgesehen, welche fest mit dem Auflageelement 12 verbunden ist.

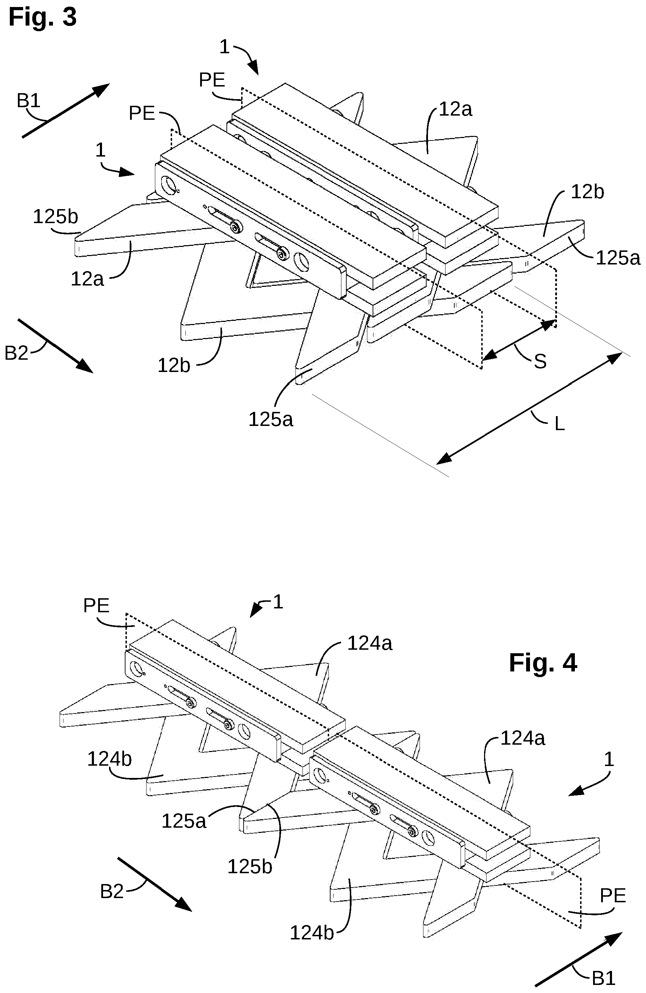

Mit gestrichelten Linien ist die Positionierungsebene PE eingezeichnet, welche eine gedachte Hilfsgeometrie zur Beschreibung des Werkstückträgers 1 darstellt. Die Positionierungsebene PE ist senkrecht zu der in der Darstellung nach unten weisenden Auflagefläche 121 des Auflageelementes 12 orientiert. Bei einer Auflage des Werkstückträgers 1 auf einem horizontal orientierten Untergrund, beispielsweise auf einem Förderband, ist die Positionierungsebene PE senkrecht dazu, das heißt vertikal orientiert. Die Positionierungsebene PE halbiert den Werkstückträger 1 in seiner Länge in Richtung der ersten Bewegungsrichtung B1, welche durch einen Pfeil in der Darstellung gekennzeichnet ist. In der dargestellten Ausführungsform halbiert die Positionierungsebene PE auch die Aufnahmefläche 111, was durch die gestrichelte Linie in der Mitte der Aufnahmefläche 111 symbolisiert ist. Die Positionierungsebene PE dient als Referenzgeometrie bei der folgenden Beschreibung des Werkstückträgers 1 und bei der Beschreibung des Zusammenspiels mehrerer Werkstückträger untereinander in einer Förderanlage. Ebenfalls durch einen Pfeil symbolisiert ist links vor dem Werkstückträger 1 eine zweite Bewegungsrichtung B2 eingezeichnet. Die erste Bewegungsrichtung B1 und die zweite Bewegungsrichtung B2 sind bevorzugte Richtungen, entlang derer der Werkstückträger 1 in einer Förderanlage bewegt wird. Die unterschiedlichen Eigenschaften des Werkstückträgers 1 bei einer Bewegung entlang der ersten Bewegungsrichtung B1 zur Bewegung entlang der zweiten Bewegungsrichtung B2 sind in den Fig. 3 und 4 dargestellt und dazu beschrieben.

Das Auflageelement 12 besteht in der dargestellten Ausführungsform aus einem in einer Richtung senkrecht zur Auflagefläche 121 oben angeordneten ersten Teilbereich 12a und einem in dieser Richtung unten angeordneten zweiten Teilbereich 12b. Der oben angeordnete erste Teilbereich 12a ist fest mit der Basisfläche 112 der Werkstückbasis 11 verbunden. Der zweite Teilbereich 12b ist mit dem ersten Teilbereich 12a auf dessen der Werkstückbasis 11 abgewandten Seite verbunden. Die Auflagefläche 121, mit der der Werkstückträger 1 auf dem Untergrund, beispielsweise auf einem Förderelement einer Förderanlage, aufliegt ist auf der dem ersten Teilbereich 12a abgewandten Seite des zweiten Teilbereichs 12b angeordnet. In der dargestellten Ausführungsform ist die Auflagefläche 121 plan ausgeführt und erstreckt sich über die gesamte Oberfläche der in der Darstellung nach unten gewandten Seite des zweiten Teilbereichs 12b. In der dargestellten Ausführungsform sind die Auflagefläche 121 und die Aufnahmefläche 111 parallel zueinander orientiert. Es ist jedoch auch möglich, dass diese beiden Flächen in einem Winkel zueinander orientiert sind. Das Auflageelement 12 umfasst zwei Aussparungen 123a und 123b, von denen jeweils eine Aussparung 123a im ersten Teilbereich 12a und eine zweite Aussparung 123b im zweiten Teilbereich 12b angeordnet sind. Die beiden Aussparungen 123a und 123b weisen in der dargestellten Ausführungsform in einer Draufsicht auf die Auflagefläche 121 eine dreieckige Form auf. Die beiden Aussparungen 123a und 123b sind in einer Richtung senkrecht zur Auflagefläche 121 versetzt zueinander, übereinander angeordnet. Die Öffnungen der beiden Aussparungen 123a und 123b sind in der ersten Bewegungsrichtung B1 auf einander gegenüberliegenden Seiten des Auflageelementes 12 angeordnet. Das Auflageelement 12 umfasst weiterhin zwei Vorsprünge 124a und 124b welche ebenfalls in einer Richtung senkrecht zur Auflagefläche 121 versetzt zueinander angeordnet sind. Der erste Vorsprung 124a wird in der dargestellten Ausführungsform durch die dreieckig geformte, vorstehende Spitze des oberen ersten Teilbereiches 12a gebildet, welche in der Darstellung nach hinten rechts weist. Der zweite Vorsprung 124b wird durch die dreieckig geformte, vorstehende Spitze des unteren Teilbereiches 12b gebildet, welche in der Darstellung nach vorne links weist. In einer Richtung senkrecht zur Auflagefläche 121 ist die erste Aussparung 123a benachbart zum zweiten Vorsprung 124b und die zweite Aussparung 123b benachbart zum ersten Vorsprung 124a angeordnet. Die Vorsprünge 124a und 124b sind formkomplementär zu den Aussparungen 123a und 123b gestaltet, wodurch sich die Vorsprünge 124a und 124b in die Aussparungen 123a und 123b jeweils benachbarter Werkstückträger 1 einbringen lassen. Werden zwei baugleiche Werkstückträger 1 senkrecht zu deren Positionierungsebenen PE oder parallel zur ersten Bewegungsrichtung B1 aufeinander zu bewegt, so ist der in einer Richtung senkrecht zur Auflagefläche 121 näher an der Werkstückbasis 11 angeordnete Vorsprung 124a in die in diese Richtung näher an der Werkstückbasis 11 angeordnete Aussparung 123a eines benachbarten Werkstückträgers 1 einbringbar. Ein solcher Zustand ist beispielsweise in Fig. 3 dargestellt. Gleichzeitig ist bei der beschriebenen Annäherung zweier baugleicher Werkstückträger 1 der in einer Richtung senkrecht zur Auflagefläche 121 näher an der Auflagefläche 121 angeordnete zweite Vorsprung 124b in die in dieser Richtung näher an der Auflagefläche 121 angeordnete zweite Aussparung 123b eines anderen Werkstückträgers 1 einbringbar. Durch dieses Einschieben der Vorsprünge 124a, 124b in die Aussparungen 123a, 123b überlappen sich benachbarte Werkstückträger 1 gegenseitig und das Stichmaß S, welches dem Abstand zwischen den Positionierungsebenen PE benachbarter Werkstückträger 1 entspricht, kann gegenüber einem Zustand, in dem die Vorsprünge 124a, 124b nicht die Aussparungen 123a, 123b eingeschoben werden, signifikant verringert werden. Durch dieses bereichsweise ineinander Einschieben zweier benachbarter Werkstückträger 1 können diese in einem aufgestauten Zustand in einer Förderanlage platzsparend zwischengespeichert werden. Erfindungsgemäß erstrecken sich beide Aussparungen 123a und 123b in der ersten Bewegungsrichtung B1 bereichsweise auf beiden Seiten der Positionierungsebene PE. Die erste Aussparung 123a beginnt an den nach links vorne gewandten Enden des V-förmig gestalteten ersten Teilbereiches 12a und erstreckt sich in der ersten Bewegungsrichtung B1 bis zur inneren Spitze des ersten Teilbereiches 12a, welcher in der Darstellung durch die Werkstückbasis 11 verdeckt ist. Die zweite Aussparung 123b erstreckt sich, gespiegelt zur Positionierungsebene PE, von den nach rechts hinten gewandten Enden des zweiten Teilbereiches 12b bis zur inneren Spitze des ebenfalls V-förmig gestalteten zweiten Teilbereichs 12b, welcher in der Darstellung links vor dem Abstandselement 13 zu sehen ist. Die Länge der beiden Aussparungen 123a und 123b ist somit größer als die Hälfte der Gesamtlänge des Werkstückträgers 1 in der ersten Bewegungsrichtung B1. Wie in Fig. 1 gut zu erkennen ist, erstreckten sich beide Aussparungen 123a und 123b durch die Positionierungsebene PE hindurch. In der dargestellten Ausführungsform werden die beiden Vorsprünge 124a und 124b durch die nach außen gewandten Außenflächen der V-förmig gestalteten Teilbereiche 12a und 12b gebildet. Als erster Vorsprung 124a ist derjenige Bereich des ersten Teilbereiches 12a zu verstehen, der sich ausgehend von den beiden Führungselementen 125a und 125b an den Außenseiten bis zur Spitze erstreckt, welche nach hinten rechts gewandt ist. Es ist gut zu erkennen, dass sich auch dieser erste Vorsprung 124a bereichsweise auf zwei einander gegenüberliegenden Seiten der Positionierungsebene PE erstreckt. Gleiches gilt für den zweiten Vorsprung 124b, welcher, in einer Draufsicht auf die Auflagefläche 121, gespiegelt um die Positionierungsebene PE zum ersten Vorsprung 123a am zweiten Teilbereich 12b angeordnet ist.

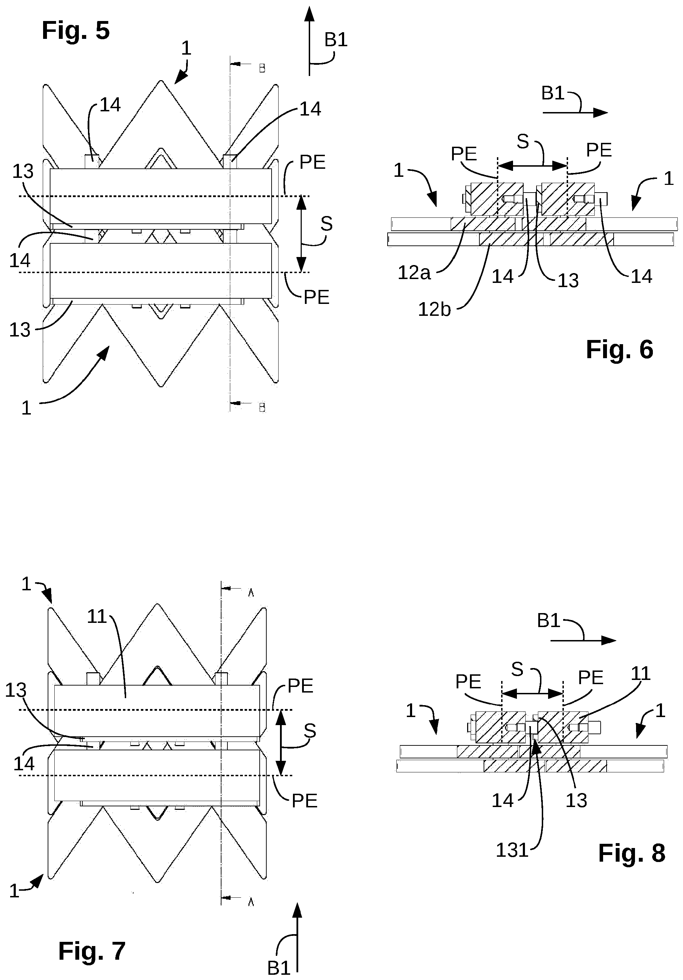

Die beiden Teilbereiche 12a und 12b sind in der dargestellten Ausführungsform im Wesentlichen identisch geformt und weisen eine identische Größe auf. Die beiden Teilbereiche 12a und 12b sind jedoch unterschiedlich zueinander, relativ zur Positionierungsebene PE orientiert. In einer Draufsicht auf die Auflagefläche 121 weist jeder Teilbereich 12a und 12b auf einer ersten Seite eine Außenkontur auf, welche im Wesentlichen der Außenkontur dieses Teilbereichs 12a und 12b auf seiner in der ersten Bewegungsrichtung B1 gegenüberliegenden Seite entspricht. In der dargestellten Ausführungsform sind diese beiden einander gegenüberliegenden Außenkonturen jeweils V-förmig ausgeführt. Auf diese Weise sind die durch eine erste Außenkontur gebildeten Vorsprünge 124a und 124b formkomplementär zu den durch die gegenüberliegende zweite Außenkontur gebildeten Aussparungen 123a und 123b ausgeführt und lassen sich so besonders gut ineinander einschieben. In einer Draufsicht auf die Auflagefläche ist das gesamte Auflageelementes 12 symmetrisch zur Positionierungsebene PE ausgebildet, wobei das Auflageelementes 12 durch die beiden übereinander angeordneten Teilbereichen 12a und 12b gebildet wird. Eine solche Draufsicht auf die Auflagefläche 121 ist beispielsweise in Fig. 5 und 7 zu sehen. Weiterhin ist das Auflageelementes 12 und auch jeder Teilbereich 12a und 12b für sich in einer Draufsicht auf die Auflagefläche 121 achsensymmetrisch zu einer Achse ausgeführt, welche senkrecht zur Positionierungsebene PE orientiert ist. In der dargestellten Ausführungsform verläuft diese Symmetrieachse durch die nach außen gewandten Spitzen der beiden Vorsprünge 124a und 124b. In der dargestellten Ausführungsform ist jeder Teilbereich 12a und 12b in einer Draufsicht auf die Auflagefläche V-förmig ausgebildet. Die beiden Schenkel des V verlaufen gradlinig und sind zueinander in einem Winkel von etwa 70° ausgerichtet. Dieser Winkel zwischen den Schenkeln des V kann jedoch auch anders ausgeführt sein und liegt bevorzugt in einem Bereich zwischen 5° und 150°. Die dargestellte V-Form der beiden Teilbereiche 12a und 12b ist zum einen vorteilhaft, da sie in einfacher Weise herstellbar und zu einem Auflageelement 12 montierbar ist. Zum anderen ermöglicht die V-Form mit ihren Ebenen, geradlinigen Außenkonturen auch ein schräges Aufstauen mehrerer Werkstückträger, was später beschrieben wird. Die beiden Teilbereiche 12a und 12b können selbstverständlich auch anders geformt sein, beispielsweise in einer doppelten V-Form oder auch in einer Form, welche gerundete oder gewölbte Außenkonturen in Richtung der ersten Bewegungsrichtung B1 aufweist.

Das Auflageelement 12 weist in der dargestellten Ausführungsform insgesamt vier Führungselemente 125a, 125b auf, von denen jeweils zwei am ersten Teilbereich 12a und zwei weitere am zweiten Teilbereich 12b angeordnet sind. Diese Führungselemente 125a, 125b sind dazu vorgesehen, während des Transports des Werkstückträgers 1 durch eine Förderanlage zumindest zeitweise und/oder bereichsweise an einer Führung anzulegen. In der dargestellten Ausführungsform ist jedes Führungselement 125a, 125b durch eine plane Führungsfläche gebildet. Alternativ kann jedes Führungselement 125a, 125b jedoch auch durch eine Kombination aus zwei Führungspunkten oder durch eine Führungslinie gebildet sein. Die Führungselemente 125a, 125b sind in einer Richtung senkrecht zur ersten Bewegungsrichtung B1 außen am Auflageelement 12 angeordnet. In der dargestellten Ausführungsform sind die Führungselemente 125a, 125b an den freien Enden der Schenkel der V-förmig ausgeführten Teilbereiche 12a und 12b angeordnet. Unter freien Enden sind dabei die Enden zu verstehen, welche nicht an der Spitze des V miteinander verbunden sind. Die Führungselemente 125a, 125b sind an den Stirnseiten der freien Enden der Schenkel angeordnet, wobei die Führungselemente 125a, 125b am ersten Teilbereich 12a zu den Führungselementen 125a, 125b am zweiten Teilbereich fluchten. In der dargestellten Ausführungsform verlaufen die als Führungsflächen ausgeführten Führungselemente 125a, 125b parallel zur ersten Bewegungsrichtung B1 und senkrecht zur Positionierungsebene PE. Die Führungselemente 125a, 125b dienen bei einer Bewegung des Werkstückträgers parallel zur ersten Bewegungsrichtung B1 der Führung in der Förderanlage. Bei einer Bewegung des Werkstückträgers 1 in der zweiten Bewegungsrichtung B2 können die Führungselemente 125a, 125b auch als Anschlagflächen zweier benachbarter Werkstückträger 1 untereinander dienen. Dieser Zustand ist beispielsweise in Fig. 4 dargestellt.

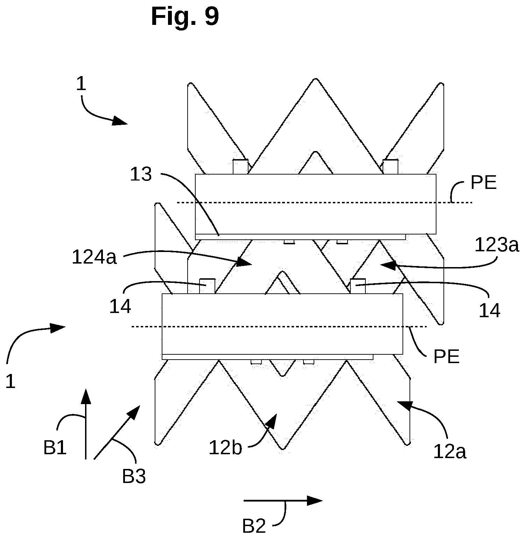

In Fig. 1 sind die erste Bewegungsrichtung B1, in der ein Ineinanderschieben mehrerer Werkstückträger 1 möglich ist, und die zweite Bewegungsrichtung B2, in der ein Ineinanderschieben mehrerer Werkstückträger 1 nicht möglich ist, durch Pfeile symbolisch eingezeichnet. Zusätzlich ist es jedoch auch möglich, mehrere Werkstückträger 1 in einer Richtung, welche zwischen der ersten Bewegungsrichtung B1 in der zweiten Bewegungsrichtung B2 liegt, ineinander einzuschieben. Beispielsweise kann ausgehend von dem in Fig. 1 dargestellten Zustand ein zweiter, nicht dargestellter Werkstückträger 1, der identisch zum dargestellten Werkstückträger 1 im Raum orientiert ist, von in der Darstellung links vorne in eine Richtung auf den dargestellten Werkstückträger 1 zubewegt werden, die ausgehend von der durch den Pfeil symbolisierten ersten Bewegungsrichtung B1 um beispielsweise 30° nach hinten links abweicht. In diesem Fall dringt ebenfalls der erste Vorsprung 124a des zweiten, zugeführten Werkstückträgers 1 in die erste Aussparung 123a des dargestellten Werkstückträgers 1 ein, jedoch aus einer zur ersten Bewegungsrichtung B1 schräg orientierten Richtung. Die Außenkontur des ersten Vorsprungs 124a des zugeführten Werkstückträgers trifft dabei auf die Innenkontur in der Aussparung 123a des dargestellten Werkstückträgers 1 auf. Dadurch, dass sowohl die Außenkontur des Vorsprung 124a als auch die Innenkontur der Aussparung 123a plan ausgeführt sind, gleiten die beiden Konturen aneinander entlang, wodurch die schräge Zustellung des zweiten Werkstückträgers 1 in eine Bewegung des zweiten Werkstückträgers parallel zur ersten Bewegungsrichtung B1 übersetzt wird. Durch diese Übersetzung zwischen den beiden Konturen wird also auch bei einem schrägen Zustellen eines zweiten Werkstückträgers 1 der erste Vorsprung 124a schließlich in die erste Aussparung 123a eingeführt. Gleiches gilt für den zweiten Vorsprung 124a und die zweite Aussparung 123b. Diese schräge Zustellbarkeit, welche ebenfalls zu einem ineinander Einschieben benachbarter Werkstückträger 1 und somit zu einem Aufstauen führt, erleichtert es, die Werkstückträger innerhalb der Förderanlage in unterschiedliche Richtungen zu lenken. Dadurch, dass sich benachbarte Werkstückträger 1 bei einem schrägen gegenseitigen Zustellen quasi selbst führen, können andere Teilbereiche der Förderanlage wesentlich einfacher und somit zuverlässiger und kostengünstiger ausgeführt werden. Insbesondere wird Aufwand für Stationen zum Drehen oder Ablenken der Werkstückträger in der Förderanlage eingespart. Die V-Form, welche die beiden Teilbereiche 12a und 12b in der dargestellten Ausführungsform aufweisen, ist besonders günstig für ein solches schräges Zustellen von Werkstückträgern 1, da die planen Außenkonturen der Teilbereiche 12a und 12b ein solches schräges Zustellen aus zwei schrägen Richtungen ermöglichen. Darüber hinaus können Werkstückträger ausgehend von dem in Fig. 3 dargestellten aufgestauten Zustand auch in einer schrägen Richtung wieder vereinzelt werden. Ausgehend von dem in Fig. 3 dargestellten Zustand kann ein Werkstückträger in eine Richtung bewegt werden, welche zwischen der ersten Bewegungsrichtung B1 und der zweiten Bewegungsrichtung B2 liegt. Auch in diesem Fall gleitet zunächst die Außenkontur eines Vorsprung 124a, 124b entlang einer Innenkontur einer Aussparung 123a, 123b entlang, so lange, bis der Vorsprung 124a, 124b aus der Aussparung Aussparung 123a, 123b ausgetreten ist. Ab dann kann der losgelöste Werkstückträger 1 vereinzelt entlang der neuen Bewegungsrichtung bewegt werden. Für ein solches schräges Zustellen bzw. Aufstauen und anschließendes Vereinzeln in schräger Richtung ist es besonders günstig, wenn ein Teil der Außenflächen oder Außenkonturen der beiden Teilbereiche 12a und 12b zumindest bereichsweise plan ausgeführt ist. Bevorzugt sind die beiden Schenkel der V-förmig ausgeführten Teilbereiche 12a, 12b jeweils in einem Winkel zwischen 1° und 89° zur Positionierungsebene PE orientiert. Um ein gleichmäßiges schräges Aufstauen oder Vereinzeln in einander gegenüberliegenden schrägen Richtungen zu ermöglichen, sind die Winkel der beiden Schenkel des V bevorzugt in einem identischen Winkel zur Positionierungsebene PE orientiert. Ein Zustand beim schrägen Aufstauen zweier Werkstückträger 1 ist in Fig. 9 dargestellt.

Der Werkstückträger 1 in der in Fig. 1 dargestellten Ausführungsform umfasst ein Abstandselement 13, welches dazu vorgesehen ist im Zusammenwirken mit zumindest einem Anschlag 14 den Abstand zwischen zwei benachbarten Werkstückträgern 1 in der ersten Bewegungsrichtung B1 einzustellen. In der dargestellten Ausführungsform ist das Abstandselement 13 plattenförmig ausgeführt. Das Abstandselement 13 ist seitlich an der Werkstückbasis 11 zwischen der Aufnahmefläche 111 und dem ersten Teilbereich 12a des Auflageelementes 12 angeordnet. Das Abstandselement 13 ist beweglich mit der Werkstückbasis 11 verbunden. Diese bewegliche Verbindung wird dadurch erreicht, dass in dem Abstandselement 132 Langlöcher eingebracht sind, welche das Abstandselement 13 in einer Richtung parallel zur ersten Bewegungsrichtung B1 durchdringen. Das Abstandselement 13 ist durch zwei Schrauben mit der Werkstückbasis 11 verbunden, von denen jeweils eine ein Langloch durchdringt. Das Abstandselement 13 wird durch die Köpfe der Schrauben in einem Schiebesitz an der Werkstückbasis 11 gehalten. Die Längsausrichtung der Langlöcher ist senkrecht zur ersten Bewegungsrichtung B1 orientiert. Dadurch ergibt sich eine Verschiebbarkeit des Abstandselementes 13 senkrecht zur ersten Bewegungsrichtung B1 und parallel zur Positionierungsebene PE. In der dargestellten Ausführungsform weist das Abstandselement zwei kreisrunde Ausnehmungen 131 auf, welche jeweils das Abstandselement 13 in der ersten Bewegungsrichtung B1 durchdringen. Wird das Abstandselement 13 parallel zur Positionierungsebene PE verschoben, so ändert sich die relative Position der Ausnehmungen 131 zur Werkstückbasis 11. Auf der dem Abstandselement 13 gegenüberliegenden Seite der Werkstückbasis 11 sind zwei Anschläge 14 angeordnet, welche in der Darstellung in Fig. 1 nur bereichsweise zu sehen sind. Die beiden Anschläge 14 sind beispielsweise in Fig. 5 besser zu erkennen. Jeder der Anschläge 14 erstreckt sich in einer Richtung senkrecht zur Positionierungsebene PE und parallel zur Aufnahmefläche 111. Jeder Anschlag 14 weist eine Form und Größe auf, welche in eine der Ausnehmungen 131 im Abstandselement 13 eines anderen Werkstückträgers 1 einbringbar ist. In der dargestellten Ausführungsform ist jeder Anschlag 14 als Vorsprung ausgeführt, welcher wie ein Kreiszylinder geformt ist und über die Seitenfläche der Werkstückbasis 11 vorsteht. In einer ersten Position des Abstandselementes 13 relativ zur Werkstückbasis 11 fluchtet jeweils eine Ausnehmung 131 mit einem Anschlag 14. In einer zweiten Position des Abstandselementes 13 relativ zur Werkstückbasis 11 sind die Ausnehmungen 131 senkrecht zur ersten Bewegungsrichtung B1 zu den Anschlägen 14 verschoben. Durch eine Veränderung der Position des Abstandselementes 13 zur Werkstückbasis 11 kann eingestellt werden, ob bei einem Aufstauen mehrerer Werkstückträger 1 in der ersten Bewegungsrichtung B1 die Anschläge 14 in die Ausnehmung 131 eines benachbarten Werkstückträgers eindringen können oder nicht. Auf diese Weise kann das Stichmaß S zwischen zwei benachbarten Werkstückträger 1 eingestellt werden. Diese Einstellbarkeit ist in Fig. 5 bis 8 dargestellt und dazu beschrieben. Die Position des Abstandselementes 13 kann in der dargestellten Ausführungsform automatisch während des Transports des Werkstückträgers 1 durch eine Förderanlage eingestellt werden. Aus diesem Grund weist die Werkstückbasis 11 an ihren Stirnseiten in der zweiten Bewegungsrichtung B2 jeweils eine Kavität 113 auf, welche die Werkstückbasis 11 in eine Richtung senkrecht zur Positionierungsebene PE durchdringt. Jede der beiden Kavitäten 113 ist an der Stirnseite der als Quader ausgeführten Werkstückbasis 11 geöffnet. In dem in Fig. 1 dargestellten Zustand steht das Abstandselement 13, betrachtet aus der ersten Bewegungsrichtung B1, in die hinten links angeordnete Kavität 113 ein. Das Abstandselement 13 steht jedoch nicht in die vorne rechts angeordnete Kavität 113 ein. Ausgehend vom dargestellten Zustand kann durch Einbringen eines Gegenstandes, insbesondere eines Schwertes einer Förderanlage in die Kavität 113 links hinten das Abstandselement 13 relativ zur Werkstückbasis 11 nach vorne rechts verschoben werden. In diesem verschobenen Zustand steht dann das Abstandselement 13 in die Kavität 113 vorne rechts ein. Durch Einbringen eines Gegenstandes in eine der beiden Kavitäten 113 kann somit die relative Position des Abstandselementes 13 zur Werkstückbasis 11 verstellt werden. Durch diese Verstellung wird auch die Position der beiden Ausnehmungen 131 verstellt, was wiederum beeinflusst, ob die Anschläge 14 eines benachbarten Werkstückträgers 1 in die Ausnehmungen 131 einführbar sind oder nicht. Anstelle des Vorsehens der beiden Kavitäten 113 kann das Abstandselement 13 auch länger als die Werkstückbasis 11 ausgeführt sein, so dass es stets zumindest auf einer Seite über die Werkstückbasis 11 vorsteht. In diesem Fall ist die Gesamtlänge des Abstandselementes 13 parallel zur Positionierungsebene PE größer als die Gesamtlänge der Werkstückbasis 11. In diesem Fall kann das Abstandselement 13 von außen durch einen Gegenstand verschoben werden, ohne dass dieser in eine Kavität 113 eindringt. Die Kavitäten 113 werden in diesem Fall nicht vorgesehen und auch nicht benötigt.

Fig. 2 zeigt eine Vorderansicht in Richtung der ersten Bewegungsrichtung B1 auf einen Werkstückträger 1 gemäß der in Fig. 1 dargestellten Ausführungsform. Fig. 2 zeigt die gleiche Ausführungsform im gleichen Zustand wie Fig. 1. Somit sei für die Elemente, die nicht in Zusammenhang mit Fig. 2 ergänzend beschrieben werden auf die Beschreibung zu Fig. 1 verwiesen. In der Vorderansicht in Fig. 2 ist gut zu erkennen, dass der erste Teilbereich 12a und der zweite Teilbereich 12b übereinander angeordnet sind, wobei die jeweils an diesen Teilbereichen 12a, 12b angeordneten Führungselemente 125a, 125b zueinander fluchten. Zwischen dem zweiten Teilbereich 12b und dem ersten Teilbereich 12a sowie zwischen dem ersten Teilbereich 12a und der Werkstückbasis 11 befindet sich ein Abstand, welcher durch eine Distanzscheibe definiert ist, welche zwischen den Elementen angeordnet ist. Dieser Abstand bzw. diese Abstände verhindern ein Verkanten oder Verklemmen benachbarter Werkstückträger 1 beim Aufstauen in der ersten Bewegungsrichtung B1. In der dargestellten Ausführungsform ist die Breite des Auflageelementes 12 in der zweiten Bewegungsrichtung B2 größer als die Breite der Werkstückbasis 11. Eine solche breite Ausführung des Auflageelementes 12 und somit der Auflagefläche 121 bewirkt eine hohe Kippstabilität des Werkstückträgers 1 auch in der zweiten Bewegungsrichtung B2. In der Ansicht in Fig. 2 ist gut zu erkennen, dass das Abstandselement 13 in die auf der linken Seite angeordnete Kavität 113 einsteht bzw. diese überlappt. Das Abstandselement 13 steht jedoch nicht oder nur in sehr geringem Maß in die rechts angeordnete Kavität 113 ein. Ausgehend von dem in Fig. 2 dargestellten Zustand kann das Abstandselement 13, geführt durch die darin angeordneten Langlöcher, nach rechts verschoben werden, so dass es dann in die rechts angeordnete Kavität 113 einsteht. In der Vorderansicht in Fig. 2 ist auch gut zu erkennen, dass sowohl die Auflagefläche 121 als auch die Aufnahmefläche 111 plan ausgeführt sind, wobei beide Flächen parallel zueinander orientiert sind.

Fig. 3 zeigt eine perspektivische Ansicht auf zwei Werkstückträger 1 nach der in Fig. 1 dargestellten Ausführungsform im aufgestauten Zustand entlang der ersten Bewegungsrichtung B1. Zu sehen sind zwei Werkstückträger 1, welche identisch zu dem Werkstückträger in Fig. 1 sind. Die beiden Werkstückträger 1 sind in Richtung der ersten Bewegungsrichtung B1 ineinander geschoben. Es ist gut zu erkennen, dass der zweite Vorsprung 124b des hinten rechts dargestellten Werkstückträgers 1 in die zweite Aussparung 123b des vorne links dargestellten Werkstückträgers 1 eingebracht ist. Der zweite Vorsprung 124b des rechten Werkstückträgers 1 ist bis über die Positionierungsebene PE des linken Werkstückträgers 1 hinaus in die zweite Aussparung 123b des linken Werkstückträgers 1 eingebracht. Darüber hinaus ist der erste Vorsprung 124a des linken Werkstückträgers 1 bis über die Positionierungsebene PE des rechten Werkstückträgers 1 hinaus in die erste Aussparung 123a eingebracht. Weiterhin ist zu erkennen, dass die ersten Teilbereiche 12a und die zweiten Teilbereiche 12b beider Werkstückträger 1 jeweils einen Abstand zueinander aufweisen und parallel zueinander orientiert sind. Alle Führungselemente 125a der beiden Werkstückträger 1 fluchten im dargestellten aufgestauten Zustand zueinander. Gleiches gilt für alle Führungselemente 125b. Die beiden Werkstückträger 1 liegen im dargestellten Zustand aneinander an, wobei die beiden Anschläge 14 des linken Werkstückträgers 1 am Abstandselement 13 des rechten Werkstückträgers 1 anliegen, ohne in dessen Ausnehmungen 131 einzudringen. Dieses Anliegen ist in der Draufsicht in Fig. 7 besser zu erkennen und dazu beschrieben. Der Abstand zwischen den beiden Positionierungsebenen PE der benachbarten Werkstückträger 1 ist das Stichmaß S. In dem Fall, in dem Werkstücke mit deren Mittelebenen deckungsgleich zur Positionierungsebene PE auf den Werkstückträger 1 aufgebracht sind, entspricht das Stichmaß S auch dem Mittenabstand der aufgebrachten Werkstücke. Die Länge L oder Gesamtlänge des linken Werkstückträgers 1 in der ersten Bewegungsrichtung B1 erstreckt sich vom nach links gewandten Ende des ersten Teilbereiches 12a zum nach rechts gewandten Ende des zweiten Teilbereiches 12b. Die Länge L kann auch als Abstand zwischen den Spitzen der V-förmig ausgeführten Teilbereiche 12a und 12b definiert sein. Es ist in Fig. 3 deutlich zu erkennen, dass im aufgestauten Zustand das Stichmaß S kleiner ist als die Hälfte der Länge L des Werkstückträgers 1. Dadurch ist es möglich, mehrere Werkstückträger 1 platzsparend aufzustauen, wobei die Werkstückträger 1 gleichzeitig eine große Länge L aufweisen, was für eine hohe Kippstabilität in der ersten Bewegungsrichtung B1 sorgt. In einer nicht dargestellten Förderanlage liegen die Führungselemente 125a, 125b zumindest zeitweise an einer Führung an. Die Führungsrichtung, welche die Führung der Förderanlage vorgibt, entspricht im Wesentlichen beim dargestellten Zustand der ersten Bewegungsrichtung B1. Die Anlage der Führungselemente 125a, 125b an der Führung bewirkt, dass die Ausrichtung der Positionierungsebene PE zur Führungsrichtung stets gleich bleibt und sich die Werkstückträger 1 nicht drehen können. In der Förderanlage liegen die Auflageflächen 121 auf der Oberfläche eines Förderelementes auf, welches beispielsweise durch ein Förderband gebildet sein kann.

Fig. 4 zeigt eine perspektivische Ansicht auf zwei Werkstückträger 1 nach der in Fig. 1 dargestellten Ausführungsform im aufgestauten Zustand entlang einer zweiten Bewegungsrichtung B2. Im Unterschied zu Fig. 1 und 3 sind in Fig. 4 die Positionierungsebenen PE zweier Werkstückträger 1 parallel zur zweiten Bewegungsrichtung B2 orientiert. Die Positionierungsebenen PE sind parallel zur Führungsrichtung der Förderanlage orientiert. In dieser Orientierung können benachbarte Werkstückträger 1 nicht ineinander eingeschoben werden. Im dargestellten aufgestauten Zustand entlang der zweiten Bewegungsrichtung B2 liegen die Führungselemente 125a des links dargestellten Werkstückträgers 1 an den Führungselementen 125b des rechts dargestellten Werkstückträgers 1 an. In dieser Ausrichtung überlappen sich die aufgestauten Werkstückträger 1 nicht. Die Positionierungsebenen PE der aufgestauten Werkstückträger 1 fluchten zueinander. In einer Förderanlage verläuft im dargestellten Zustand die Führungsrichtung parallel zur zweiten Bewegungsrichtung B2. Während des Transports der Werkstückträger 1 durch die Förderanlage liegen zumindest zeitweise die Vorsprünge 124a, 124b der Werkstückträger 1 an der Führung der Förderanlage an, wodurch die Werkstückträger 1 geführt sind und sich nicht während des Transports drehen können. Im dargestellten aufgestauten Zustand entlang der zweiten Bewegungsrichtung B2 ist jede Positionierungsebene PE aus einer Richtung senkrecht zur zweiten Bewegungsrichtung B2 gut zu erreichen, was eine Bearbeitung eines Werkstücks, welches auf den Werkstückträger 1 aufgebracht ist, erleichtert. Wird beispielsweise ein plattenförmiges Werkstück mit seiner Mittelebene deckungsgleich zur Positionierungsebene PE auf den Werkstückträger aufgebracht, können die großen Seitenflächen dieses plattenförmigen Werkstücks besonders einfach bearbeitet werden, wobei die Werkstücke auf den Werkstückträger 1 verbleiben können. Besonders vorteilhaft an dem erfindungsgemäßen Werkstückträger 1 ist, dass dieser sowohl in dem in Fig. 4 gezeigten Zustand als auch in dem in Fig. 3 gezeigten Zustand eingesetzt werden kann. In einer Förderanlage ist es möglich, die Werkstückträger während des Transportes von dem in Fig. 4 gezeigten Zustand in den in Fig. 3 gezeigten Zustand und umgekehrt zu überführen. Dies ermöglicht eine sehr hohe Flexibilität bei der Bearbeitung der Werkstücke, die auf den Werkstückträger 1 aufgebracht sind. Je nach durchzuführenden Bearbeitungsschritt kann in einfacher Weise die Ausrichtung der Positionierungsebene PE zur Führungsrichtung der Förderanlage verändert werden.

In den Fig. 5 bis 8 ist dargestellt, wie bei einem Aufstauen mehrerer Werkstückträger entlang der ersten Bewegungsrichtung B1 das Stichmaß S zwischen den Positionierungsebene PE benachbarter Werkstückträger 1 durch das Abstandselement 13 eingestellt werden kann. Diese Verstellung des Stichmaßes S kann beispielsweise zur Durchführung eines Verfahrens genutzt werden, bei dem Werkstücke, die jeweils an einem Werkstückträger 1 befestigt sind, während des Transports zusammengefügt werden.

Fig. 5 zeigt eine Draufsicht auf zwei Werkstückträger 1 nach der in Fig. 1 dargestellten Ausführungsform im aufgestauten Zustand entlang der ersten Bewegungsrichtung B1 mit einem ersten Stichmaß S. Fig. 5 zeigt den in Fig. 3 dargestellten Zustand in einer Draufsicht von oben aus einer Richtung senkrecht zur Auflagefläche 121. Zu den Elementen und Bauteilen in Fig. 5 sei auch ergänzend auf die Beschreibung zu Fig. 1 und 3 verwiesen. In der Draufsicht sind die Positionierungsebenen PE der Werkstückträger 1 als gestrichelte Linien dargestellt. Das Stichmaß S entspricht dem Abstand zwischen den Positionierungsebenen PE der beiden benachbart angeordneten, aufgestauten Werkstückträger 1. Das Abstandselement 13 des oben dargestellten Werkstückträgers 1 befindet sich im dargestellten Zustand in einer zweiten Position, bei der die beiden Ausnehmungen 131 im Abstandselement 13 nicht in einer Richtung senkrecht zur Positionierungsebene PE den beiden Anschlägen 14 gegenüberliegen. Im dargestellten Zustand sind die beiden Ausnehmungen 131 in einer Richtung parallel zur Positionierungsebene PE relativ zu den beiden Anschlägen 14 versetzt. Somit können die beiden Anschläge 14 des unten dargestellten Werkstückträgers 1 nicht in die beiden Ausnehmungen 131 des oben dargestellten Werkstückträgers 1 eingeführt werden, sondern schlagen an der von der Werkstückbasis 11 abgewandten Oberfläche des Abstandselementes 13 des oberen Werkstückträgers 1 an. Durch dieses Anschlagen der Anschläge 14 auf der Oberfläche des Abstandselementes 13 wird das Stichmaß S im dargestellten Zustand bestimmt. Durch die Länge der Anschläge 14 in einer Richtung senkrecht zur Positionierungsebene PE kann das Stichmaß S konstruktiv beeinflusst bzw. eingestellt werden. Auch ist es möglich, die Anschläge 14 austauschbar zu gestalten, so dass bei Bedarf das Stichmaß S durch den Austausch der Anschläge 14 in einfacher Weise beeinflusst werden kann. In Fig. 5 ist zu erkennen, dass zwischen den Teilbereichen 12a, 12b der benachbarten Werkstückträger 1 ein Abstand besteht. Dieser Abstand ist beispielsweise zwischen den beiden Spitzen der V-förmig ausgeführten Teilbereiche 12a, 12b zu erkennen.

Fig. 6 zeigt eine Seitenansicht auf die in Fig. 5 dargestellten Werkstückträger 1. In dieser Darstellung sind die Werkstückträger 1 im gleichen Zustand wie in Fig. 5 geschnitten dargestellt. Die Schnittebene ist in Fig. 5 mit B-B gekennzeichnet. In der Schnittansicht Fig. 6 ist zu sehen, dass die Anschläge 14 des links dargestellten Werkstückträgers 1 auf der nach links gewandten Oberfläche des Abstandselementes 13 des rechts dargestellten Werkstückträgers 1 anliegen. Zwischen den ersten Teilbereichen 12a und den zweiten Teilbereichen 12b der beiden Werkstückträger 1 befindet sich in der ersten Bewegungsrichtung B1 ein Abstand.

Fig. 7 zeigt eine Draufsicht auf zwei Werkstückträger 1 nach der in Fig. 1 dargestellten Ausführungsform im aufgestauten Zustand entlang der ersten Bewegungsrichtung B1 mit einem zweiten, verkleinerten Stichmaß S. Fig. 7 zeigt einen Zustand, in dem ausgehend von dem in Fig. 5 und 6 gezeigten Zustand, die Abstandselemente 13 der beiden Werkstückträger 1 nach rechts verschoben wurden. Diese Verschiebung kann beispielsweise automatisch durch das Einführen eines Schwertes von der Seite in die Kavität 113 in der Werkstückbasis 11 erfolgen. Alternativ können die Abstandselemente 13 auch anders bewegt werden, beispielsweise elektronisch gesteuert durch einen Serverantrieb, Magnetschalter oder ähnliches. Durch die Verschiebung der Abstandselemente 13 parallel zur Positionierungsebene PE ist in Fig. 7 ein Zustand hergestellt, in dem die Ausnehmungen 131 in den Abstandselementen 13 zu den gegenüberliegend an der Werkstückbasis 11 angeordneten Anschlägen 14 fluchten. Auf diese Weise können die Anschläge 14 des unten dargestellten Werkstückträgers 1 in die Ausnehmungen 131 im Abstandselement 13 des oben dargestellten Werkstückträgers 1 eindringen. Dadurch lassen sich die beiden Werkstückträger 1 weiter ineinander einschieben, so lange, bis die Stirnflächen der Anschläge 14 an der Oberfläche der Werkstückbasis 11 des benachbarten Werkstückträgers 1 anliegen oder die Werkstücke auf benachbarten Werkstückträgern 1 in Kontakt miteinander treten. Das Stichmaß S zwischen den beiden Positionierungsebenen PE ist in Fig. 7 somit kleiner als das Stichmaß S in dem in Fig. 5 dargestellten Zustand. Zwischen den Teilbereichen 12a und 12b der benachbarten Werkstückträger 1 ist nur noch ein sehr geringer Abstand vorhanden, was beispielsweise im Bereich der Spitzen der V-förmig gestalteten ersten Teilbereiche 12a gut zu erkennen ist.

Fig. 8 zeigt eine Seitenansicht auf die in Fig. 7 dargestellten Werkstückträger 1. In dieser Darstellung sind die Werkstückträger 1 im gleichen Zustand wie in Fig. 7 geschnitten dargestellt. Die Schnittebene ist in Fig. 7 mit A-A gekennzeichnet. In der Schnittansicht Fig. 8 ist zu sehen, dass die Anschläge 14 des links dargestellten Werkstückträgers 1 in die Ausnehmungen 131 im Abstandselement 13 des rechts dargestellten Werkstückträgers 1 eindringen, diese Ausnehmungen 131 durchdringen und an der nach links gewandten Oberfläche der Werkstückbasis 11 anliegen. Zwischen den ersten Teilbereichen 12a und den zweiten Teilbereichen 12b der beiden Werkstückträger 1 befindet sich in der ersten Bewegungsrichtung B1 ein sehr geringer Abstand, der signifikant kleiner als der Abstand dieser Elemente in dem in Fig. 6 gezeigten Zustand ist. Um ausgehend von dem in Fig. 7 und 8 dargestellten Zustand das Stichmaß S beim Aufstauen wieder zu vergrößern, müssen die Werkstückträger 1 soweit voneinander entfernt werden, dass die Abstandselemente 13 wieder in den in Fig. 5 und 6 gezeigten Zustand geschoben werden können. Auch dieses Vergrößern des Stichmaßes S kann automatisch während des Transportes der Werkstückträger 1 in einer Förderanlage erfolgen.

Die in Zusammenhang mit Fig. 5 bis 8 beschriebene Verstellbarkeit des Strichmaßes S zwischen zwei aufgestauten, benachbart angeordneten Werkstückträgern 1 kann beispielsweise zur Durchführung eines Fügeverfahrens von Werkstücken verwendet werden. Die Werkstücke werden zunächst auf Werkstückträger 1 aufgebracht, welche in einem größeren Stichmaß S zueinander positioniert sind. Anschließend wird zwischen die Werkstücke ein Fügematerial, beispielsweise ein Klebstoff, eingebracht oder aufgebracht. Der eigentliche Fügevorgang zwischen den Werkstücken erfolgt dann dadurch, dass das Stichmaß S wie beschrieben verkleinert wird. Dadurch wird auch der Abstand zwischen den Werkstücken reduziert, wodurch diese durch das dazwischen angeordnete Fügematerial gefügt, insbesondere geklebt, werden. Dieser Fügeprozess kann automatisch während des Durchlaufs durch eine Förderanlage erfolgen. Besonders geeignet ist eine Kombination aus mehreren erfindungsgemäßen Werkstückträgern 1 zum Fügen von Endprodukten, die aus mehreren plattenförmigen Einzelteilen zusammengesetzt werden. So können beispielsweise Batterien aus mehreren plattenförmigen Einzelzellen einfach und effizient gefügt bzw. montiert werden.

Fig. 9 zeigt eine Draufsicht auf zwei Werkstückträger 1 nach der in Fig. 1 dargestellten Ausführungsform beim Aufstauen aus einer schrägen Bewegungsrichtung B3. In dem in Fig. 9 dargestellten Zustand befindet sich der oben dargestellte Werkstückträger 1 in Ruhe und ist beispielsweise in einer Warteposition, in der mehrere Werkstückträger 1 aufgestaut werden sollen. Der in der Darstellung unten angeordnete Werkstückträger 1 bewegt sich aus einer schrägen Bewegungsrichtung B3 auf den ruhenden Werkstückträger 1 zu. Die schräge Bewegungsrichtung B3 unterscheidet sich von der ersten Bewegungsrichtung B1 und der zweiten Bewegungsrichtung B2. Die schräge Bewegungsrichtung B3 liegt zwischen der ersten Bewegungsrichtung B1 und der zweiten Bewegungsrichtung B2 und ist in einem spitzen Winkel zur ersten Bewegungsrichtung B1 orientiert. Eine solche Bewegung eines Werkstückträgers 1 entlang einer schrägen Bewegungsrichtung B3 kann beispielsweise auftreten, wenn in einer Förderanlage mehrere Werkstückträger 1 um eine Kurve oder einen Knick im Förderelement bewegt werden sollen. Wie in Fig. 9 zu sehen ist, können Werkstückträger 1, welche sich entlang einer schrägen Bewegungsrichtung B3 bewegen in ähnlicher Weise aufgestaut werden wie wenn sich die Werkstückträger 1 entlang der ersten Bewegungsrichtung B1 bewegen. In dem dargestellten Zustand ist der erste Vorsprung 124a des unteren Werkstückträgers 1 bereits in die erste Ausnehmung 123a eingedrungen. Dabei liegt die plan ausgeführt, in der Darstellung nach links oben weisende Außenkontur des ersten Vorsprung 124a des unteren Werkstückträgers 1 an der ebenfalls plan ausgeführten Innenkontur der ersten Aussparung 123a des oberen Werkstückträgers 1 an. Durch die plane Ausführung dieser Konturen gleiten die beiden Werkstückträger 1 aneinander entlang so lange, bis die Anschläge 14 des unteren Werkstückträgers am Abstandselement 13 des oberen Werkstückträgers anschlagen. Dieser Zustand ist beispielsweise in Fig. 3 oder Fig. 5 zu sehen. Besonders günstig für das dargestellte schräge Aufstauen mehrerer Werkstückträger 1 ist die symmetrische V-Form der beiden Teilbereiche 12a und 12b. Diese V-Form stellt zum einen plane Außenkonturen der Vorsprünge 124a und 124b sowie auch plane Innenkonturen der Aussparungen 123a und 123b zur Verfügung, welche, wie dargestellt, aneinander entlang gleiten können. Zum anderen ermöglicht die V-Form ein schräges Aufstauen in unterschiedlich zur ersten Bewegungsrichtung B1 orientierten schrägen Bewegungsrichtungen B3. Beispielsweise könnte der untere Werkstückträger 1 auch in einer schrägen Bewegungsrichtung B3 auf den oberen Werkstückträger zubewegt werden, welche spiegelverkehrt zur eingezeichneten schrägen Bewegungsrichtung B3, bezogen auf die erste Bewegungsrichtung B1, verläuft. Ein Umlenken der Werkstückträger 1 in zwei unterschiedlich orientierte Richtungen, bezogen auf die aktuelle Bewegungsrichtung, ist somit möglich. Je größer der Winkel zwischen den beiden Schenkeln der V-förmig ausgeführten Teilbereiche 12a und 12b ist, desto größer kann der Winkel sein, welcher zwischen der ersten Bewegungsrichtung B1 und der schrägen Bewegungsrichtung B3 aufgespannt ist. Besonders vorteilhaft an der dargestellten Ausführungsform ist, dass der aufgestaute Zustand mehrerer Werkstückträger 1, welcher beispielsweise ein Fig. 5 dargestellt ist, durch Aufstauen aus vielen unterschiedlichen schrägen Bewegungsrichtungen B3 sowie aus der ersten Bewegungsrichtung 1 stets identisch ist. Die dargestellte Ausführungsform eines Werkstückträgers 1 ist somit besonders vielseitig einsetzbar und erlaubt ein einfaches Aufstauen aus unterschiedlichen, auch toleranzbehafteten oder schwankenden Bewegungsrichtungen. Zu in Zusammenhang mit Fig. 9 nicht beschriebenen Einzelheiten zu den Werkstückträgern 1 und den unterschiedlichen Möglichkeiten des Aufstauens sei ergänzend auf die Beschreibung zu Fig. 1 verwiesen.

### Bezugszeichenliste:

- 1: Werkstückträger
- 11: Werkstückbasis
- 111: Aufnahmefläche
- 112: Basisfläche
- 113: Kavität
- 12: Auflageelement
- 12a, 12b: erster Teilbereich, zweiter Teilbereich
- 121: Auflagefläche
- 123a, 123b: erste Aussparung, zweite Aussparung
- 124a, 124b: erster Vorsprung, zweiter Vorsprung
- 125a, 125b: erstes Führungselement, zweites Führungselement
- 13: Abstandselement
- 131: Ausnehmung
- 14: Anschlag
- B1, B2, B3: erste Bewegungsrichtung, zweite Bewegungsrichtung, schräge Bewegungsrichtung
- L: Länge
- PE: Positionierungsebene
- S: Stichmaß

## Patentansprüche

1. Werkstückträger (1) für den Transport eines Werkstückes oder einer Ware in einer Förderanlage, umfassend
- zumindest eine Werkstückbasis (11), welche zur Aufnahme zumindest eines Werkstücks vorgesehen ist, wobei die Werkstückbasis (11) eine Aufnahmefläche (111) aufweist, auf welcher ein Werkstück anbringbar ist und die Werkstückbasis (11) weiterhin eine Basisfläche (112) aufweist, welche beabstandet zur Aufnahmefläche (111) angeordnet ist,
- zumindest ein Auflageelement (12), welches im Betrieb des Werkstückträgers (1) dazu vorgesehen ist, auf einem Förderelement einer Förderanlage mit Auflagefläche (121) aufzuliegen, wobei das Auflageelement (12) mit der Basisfläche (112) der Werkstückbasis (11) verbunden ist,
wobei für den Werkstückträger (1) eine erste Bewegungsrichtung (B1) vorgesehen ist, entlang welcher der Werkstückträger (1) in einer Förderanlage bewegbar ist und eine Positionierungsebene (PE) definiert ist, welche senkrecht zur Auflagefläche (121) und senkrecht zur ersten Bewegungsrichtung (B1) orientiert ist, wobei die Positionierungsebene (PE) die Aufnahmefläche (111) schneidet und entlang der ersten Bewegungsrichtung (B1) in der Mitte der Länge des Werkstückträgers (1) angeordnet ist und wobei das Auflageelement (12) zumindest zwei Aussparungen (123a, 123b) aufweist, welche in einer Richtung senkrecht zur Auflagefläche (121) versetzt zueinander angeordnet sind und wobei das Auflageelement (12) zumindest zwei Vorsprünge (124a, 124b) aufweist, welche in einer Richtung senkrecht zur Auflagefläche (121) versetzt zueinander angeordnet sind, wobei der in einer Richtung senkrecht zur Auflagefläche (121) näher an der Werkstückbasis (11) angeordnete Vorsprung (124a) eines Werkstückträgers (1) in einer Richtung senkrecht zur Positionierungsebene (PE) in die in einer Richtung senkrecht zur Auflagefläche (121) näher an der Werkstückbasis (11) angeordnete Aussparung (123a) eines anderen Werkstückträgers (1) einbringbar ist und der in einer Richtung senkrecht zur Auflagefläche (121) näher an der Auflagefläche (121) angeordnete Vorsprung (124b) eines Werkstückträgers (1) in einer Richtung senkrecht zur Positionierungsebene (PE) in die in einer Richtung senkrecht zur Auflagefläche (121) näher an der Auflagefläche (121) angeordnete Aussparung (123b) eines anderen Werkstückträgers (1) einbringbar ist,
**dadurch gekennzeichnet, dass**
sich jede der Aussparungen (123a, 123b) zumindest bereichsweise auf zwei gegenüberliegenden Seiten der Positionierungsebene (PE), insbesondere durch die Positionierungsebene (PE) hindurch, erstreckt.

2. Werkstückträger (1) nach Anspruch 1, **dadurch gekennzeichnet, dass** sich jede der Aussparungen (123a, 123b) und jeder der Vorsprünge (124a, 124b) zumindest bereichsweise auf zwei gegenüberliegenden Seiten der Positionierungsebene (PE) erstrecken, wodurch bei einem Einbringen eines Vorsprungs (124a, 124b) eines ersten Werkstückträgers (1) in eine Aussparung (123a, 123b) eines zweiten Werkstückträgers (1) der erste und der zweite Werkstückträger (1) so zueinander positionierbar sind, dass der Abstand zwischen deren Positionierungsebenen (PE) kleiner als die Hälfte der Länge (L) eines Werkstückträgers (1) in einer Richtung senkrecht zur Positionierungsebene (PE) ist.

3. Werkstückträger (1) nach einem der vorhergehenden Ansprüche, **dadurch gekennzeichnet, dass** das Auflageelement (12) zumindest zwei Führungselemente (125a, 125b) aufweist, welche jeweils zumindest zwei Führungspunkte umfassen, die in einer Richtung senkrecht zur ersten Bewegungsrichtung (B1) außen am Auflageelement (12) angeordnet sind, wobei Verbindungslinien zwischen den Führungspunkten der Führungselemente (125a, 125b) senkrecht zur Positionierungsebene (PE) orientiert sind und in Richtung parallel zur Positionierungsebene (PE) voneinander beabstandet sind, wobei die Führungselemente (125a, 125b) im Betrieb des Werkstückträgers (1) dazu vorgesehen sind, zumindest zeitweise oder bereichsweise an einer Führung einer Förderanlage anzuliegen.

4. Werkstückträger (1) nach einem der vorhergehenden Ansprüche, **dadurch gekennzeichnet, dass** das Auflagelement (12) einen ersten Teilbereich (12a) und einen zweiten Teilbereich (12b) aufweist, welche in einer Richtung senkrecht zur Auflagefläche (121) benachbart zueinander angeordnet und miteinander verbunden sind, wobei die beiden Teilbereiche (12a, 12b) im Wesentlichen eine identische Form und Größe aufweisen wobei die beiden Teilbereiche (12a, 12b) unterschiedlich relativ zur Positionierungsebene (PE) positioniert sind.

5. Werkstückträger (1) nach Anspruch 4, **dadurch gekennzeichnet, dass** der erste Teilbereich (12a) mit der Werkstückbasis (11) verbunden ist und der zweite Teilbereich (12b) mit dem ersten Teilbereich (12a) auf dessen der Werkstückbasis (11) gegenüberliegenden Seite verbunden ist, wobei die Auflagefläche (121) am zweiten Teilbereich (12b) auf dessen dem ersten Teilbereich (12a) gegenüberliegenden Seite angeordnet ist.

6. Werkstückträger (1) nach einem der Ansprüche 4 bis 5, **dadurch gekennzeichnet, dass** zumindest eines der Führungselemente (125a, 125b) am ersten Teilbereich (12a) und zumindest eines der Führungselemente (125a, 125b) am zweiten Teilbereich (12b) angeordnet ist und/oder eine erste Aussparung (123a) und ein erster Vorsprung (124a) am oder im ersten Teilbereich (12a) und eine zweite Aussparung (123b) und ein zweiter Vorsprung (124b) am oder im zweiten Teilbereich (12b) angeordnet sind.

7. Werkstückträger (1) nach einem der Ansprüche 4 bis 6, **dadurch gekennzeichnet, dass** in einer Draufsicht auf die Auflagefläche (121) die Außenkontur jedes Teilbereiches (12a, 12b) auf einer ersten Seite im Wesentlichen der Außenkontur des Teilbereiches (12a, 12b) auf einer zweiten, der ersten Seite gegenüber liegenden Seite entspricht, wobei die erste Seite der zweiten Seite in einer Richtung senkrecht zur Positionierungsebene (PE) gegenüberliegt und/oder das Auflagelement (12) in einer Draufsicht senkrecht auf die Auflagefläche (121) symmetrisch zur Positionierungsebene (PE) ausgebildet ist und/oder in einer Draufsicht auf die Auflagefläche (121) jeder Teilbereich (12a, 12b) achsensymmetrisch zu einer Achse ausgeführt ist, welche senkrecht zur Positionierungsebene (PE) orientiert ist.

8. Werkstückträger (1) nach einem der Ansprüche 4 bis 7, **dadurch gekennzeichnet, dass** in einer Draufsicht auf die Auflagefläche (121) jeder Teilbereich (12a, 12b) V-förmig ausgebildet ist, insbesondere wobei die beiden Schenkel des V in einem Winkel zwischen 5° und 150° zueinander angeordnet sind, wobei die freien Enden des V an ihren Stirnseiten jeweils ein Führungselement (125a, 125b) aufweisen, wobei die Führungselemente (125a, 125b) der benachbart zueinander, übereinander angeordneten Teilbereiche (12a, 12b) an jedem Ende des Auflageelementes (12) zueinander fluchten.

9. Werkstückträger (1) nach einem der Ansprüche 4 bis 8, **dadurch gekennzeichnet, dass** in einer Draufsicht auf die Auflagefläche (121) jeder Teilbereich (12a, 12b) zumindest bereichsweise V-förmig ausgebildet ist, wobei eine Aussparung (123a, 123b) zwischen den Schenkeln des V angeordnet ist und ein Vorsprung (124a, 124b) durch die konvexe Außenseite der Spitze des V gebildet wird, wobei in einer Draufsicht auf die Auflagefläche (121) jeder Teilbereich (12a, 12b) V-förmig ausgebildet ist, wobei die Spitzen des V der beiden Teilbereiche (12a, 12b), welche dessen beiden Schenkel miteinander verbinden, auf einander gegenüberliegenden Seiten der Positionierungsebene (PE) angeordnet sind und die beiden Teilbereiche (12a, 12b) in einer Draufsicht symmetrisch zueinander um die Positionierungsebene (PE) angeordnet sind.

10. Werkstückträger (1) nach einem der Ansprüche 4 bis 9, **dadurch gekennzeichnet, dass** in einer Draufsicht auf die Auflagefläche (121) jeder Teilbereich (12a, 12b) zumindest bereichsweise V-förmig ausgebildet ist, wobei die Außenflächen der Teilbereiche (12a, 12b) auf zwei einander senkrecht zur Positionierungsebene (PE) gegenüberliegenden Seiten zumindest bereichsweise plan ausgeführt sind, wobei die beiden Schenkel des V jeweils in einem Winkel zwischen 1° und 89°, bevorzugt im gleichen Winkel, zur Positionierungsebene (PE) orientiert sind.

11. Werkstückträger (1) nach einem der Ansprüche 4 bis 10, **dadurch gekennzeichnet, dass** ein Abstandselement (13) vorgesehen ist, welches beweglich mit der Werkstückbasis (11) verbunden ist, wobei das Abstandelement (13) seitlich an der Werkstückbasis (11) zwischen der Aufnahmefläche (111) und dem ersten Teilbereich (12a) des Auflageelementes (12) angeordnet ist und das Abstandselement (13) zumindest eine Ausnehmung (131) aufweist, welche in dessen der Werkstückbasis (11) gegenüberliegenden Seite eingebracht ist und welche sich in einer Richtung senkrecht zur Positionierungsebene (PE) und parallel zur Aufnahmefläche (111) erstreckt und zumindest ein Anschlag (14) vorgesehen ist, welcher sich in einer Richtung senkrecht zur Positionierungsebene (PE) und parallel zur Aufnahmefläche (111) erstreckt, wobei der Anschlag (14) an der in einer Richtung senkrecht zur Positionierungsebene (PE) dem Abstandselement (13) gegenüberliegenden Seite der Werkstückbasis (11) befestigt ist und wobei der Anschlag (14) zumindest bereichsweise eine Größe und Form aufweist, welche in die Ausnehmung (131) des Abstandselementes (13) passt, wobei in einer ersten Position des Abstandselementes (13) relativ zur Werkstückbasis (11) die Ausnehmung (131) in einer Richtung senkrecht zur Positionierungsebene (PE) dem Anschlag (14) gegenüberliegt und zu diesem fluchtet und in einer zweiten Position des Abstandselementes (13) relativ zur Werkstückbasis (11) die Ausnehmung (131) in einer Richtung senkrecht zur Positionierungsebene (PE) dem Anschlag (14) nicht gegenüberliegt und nicht zu diesem fluchtet.

12. Werkstückträger (1) nach Anspruch 11, **dadurch gekennzeichnet, dass** die Werkstückbasis (11) die Form eines Quaders aufweist, wobei entweder das Abstandselement (13) in einer Richtung parallel zur Positionierungsebene (PE) eine Gesamtlänge aufweist, die größer ist als die Gesamtlänge der Werkstückbasis (11), wodurch das Abstandselement (13) in einer Richtung parallel zur Positionierungsebene (PE) über die Werkstückbasis (11) vorsteht,
oder an zumindest einem Ende in Richtung der Positionierungsebene (PE) eine Kavität (113) angeordnet ist, welche die Werkstückbasis (11) in einer Richtung senkrecht zur Positionierungsebene (PE) durchdringt und welche in Richtung der Positionierungsebene (PE) an der Stirnseite der als Quader ausgeführten Werkstückbasis (11) geöffnet ist und das Abstandselement (13) in einer Ansicht aus der ersten Bewegungsrichtung (B1) in zumindest eine an einer Stirnseite der Werkstückbasis (11) angeordnete Kavität (113) einsteht oder diese überlappt, wobei das Abstandselement (13) durch Einbringen eines Gegenstandes, insbesondere eines Schwertes einer Förderanlage, in die Kavität (113) in seiner Position relativ zur Werkstückaufnahe (11) verschiebbar ist.

13. Förderanlage zum Transport von Werkstücken und/oder Waren umfassend
- ein Förderelement, welches dazu vorgesehen ist, mehrere Werkstückträger (1) durch die Förderanlage zu bewegen und wobei das Förderelement durch einen Antrieb antreibbar ist,
- eine Führung, welche das Förderelement auf zwei einander gegenüberliegenden Seiten begrenzt und welche dazu vorgesehen ist, die Werkstückträger (1), welche vom Förderelement bewegt werden, zu führen, wobei die Führung an jedem Ort des Förderelementes eine Führungsrichtung vorgibt,
- zumindest zwei Werkstückträger (1) nach einem der vorhergehenden Ansprüche, wobei die Auflagefläche (121) jedes Werkstückträgers (1) auf dem Förderelement aufliegt und zumindest ein Führungselement (125a, 125b) oder zumindest ein Teilbereich eines Vorsprungs (124a, 124b) zumindest zeitweise an der Führung anliegt.

14. Förderanlage nach dem vorhergehenden Anspruch, **dadurch gekennzeichnet, dass** die Werkstückträger (1) mit ihrer Positionierungsebene (PE) parallel zur Führungsrichtung ausgerichtet sind und die zwei Führungselemente (125a, 125b) eines ersten Werkstückträgers (1) an den zwei Führungselementen (125a, 125b) eines zweiten Werkstückträgers (1) anliegen oder die Werkstückbasis (11) eines ersten Werkstückträgers (1) an der Werkstückbasis (11) eines zweiten Werkstückträgers (1) anliegt, wobei sich die beiden Werkstückträger (1) nicht überlappen, wobei die beiden Vorsprünge (124a, 124b) beider Werkstückträger (1) während des Transports durch die Förderanlage (100) zumindest zeitweise an der Führung anliegen und/oder
die Werkstückträger (1) mit ihrer Positionierungsebene senkrecht zur Führungsrichtung ausgerichtet sind und sich die Werkstückträger (1) bereichsweise überlappen, wobei ein Vorsprung (124a, 124b) eines ersten Werkstückträgers (1) in die Aussparung (123a, 123b) eines zweiten Werkstückträgers (1) und ein Vorsprung (124a, 124b) des zweiten Werkstückträgers (1) in eine Aussparung (123a, 123b) des ersten Werkstückträgers (1) einsteht, wobei die Führungselemente (125a, 125b) jedes Werkstückträgers (1) während des Transports durch die Förderanlage (100) zumindest zeitweise an der Führung anliegen, insbesondere wobei der Anschlag (14) des ersten Werkstückträgers (1) am Abstandselement (13) des zweiten Werkstückträgers (1) anliegt.

15. Verfahren zum Fügen mehrerer Werkstücke unter Verwendung einer Förderanlage nach Anspruch 13 oder 14 umfassend die Schritte
A) Aufstauen mehrerer Werkstückträger (1), wobei die Positionierungsebenen (PE) der Werkstückträger (1) zum Aufstauen senkrecht zur Führungsrichtung orientiert sind und sich die Werkstückträger (1) gegenseitig überlappen und sich der Anschlag (14) und das Abstandselement (13) benachbarter Werkstückträger (1) berühren oder Vereinzeln mehrerer Werkstückträger (1), wobei benachbarte Werkstückträger (1) einen Abstand zueinander aufweisen und die Positionierungsebenen (PE) senkrecht oder parallel zur Führungsrichtung orientiert sind,
B) Aufbringen von Fügematerial zumindest bereichsweise zumindest auf einem Werkstück,
C) Zusammenschieben der Werkstückträger (1), wobei die Abstandselemente (13) der Werkstückträger (1) derart verstellt werden, dass die Anschläge (14) mit den Ausnehmungen (131) der Werkstückträger (1) fluchten, so dass sich die Werkstücke über das Fügematerial berühren und dadurch gefügt werden, insbesondere wobei die Werkstückträger (1) zur Durchführung von Verfahrensschritt B) und/oder Verfahrensschritt C) vom Förderelement abgehoben werden.

## Claims

1. A workpiece carrier (1) for transporting a workpiece or a product in a conveyer system, comprising:
- at least one workpiece base (11) provided for accommodating at least one workpiece, wherein the workpiece base (11) includes a receiving surface (111) on which a workpiece is mountable, and the workpiece base (11) further includes a base surface (112) which is disposed at a distance from the receiving surface (111),
- at least one contact element (12) which, in the operation of the workpiece carrier (1), is provided to rest on a conveyer element of a conveyer system including a contact surface (121), wherein the contact element (12) is connected to the base surface (112) of the workpiece base (11),
wherein a first moving direction (B1) along which the workpiece carrier (1) is movable in a conveyer system is provided for the workpiece carrier (1), and a positioning plane (PE) is defined which is oriented perpendicular to the contact surface (121) and perpendicular to the first moving direction (B1), wherein the positioning plane (PE) intersects the receiving surface (111) and is disposed in the centre of the length of the workpiece carrier (1) along the first moving direction (B1), and wherein the contact element (12) includes at least two apertures (123a, 123b) which are disposed so that they are offset relative to each other in a direction perpendicular to the contact surface (121), and wherein the contact element (12) includes at least two protrusions (124a, 124b) which are disposed so that they are offset relative to each other in a direction perpendicular to the contact surface (121), wherein the protrusion (124a) of one workpiece carrier (1) disposed closer to the workpiece base (11) in a direction perpendicular to the contact surface (121) is insertable into the aperture (123a) of another workpiece carrier (1) disposed closer to the workpiece base (11) in a direction perpendicular to the contact surface (121) in a direction perpendicular to the positioning plane (PE), and the protrusion (124b) of one workpiece carrier (1) disposed closer to the contact surface (121) in a direction perpendicular to the contact surface (121) is insertable into the aperture (123b) of another workpiece carrier (1) disposed closer to the contact surface (121) in a direction perpendicular to the contact surface (121) in a direction perpendicular to the positioning plane (PE),
**characterised in that**
each of the apertures (123a, 123b), at least in sections, extends on two opposing sides of the positioning plane (PE), particularly through the positioning plane (PE).

2. The workpiece carrier (1) according to claim 1, **characterised in that** each of the apertures (123a, 123b) and each of the protrusions (124a, 124b), at least in sections, extends on two opposing sides of the positioning plane (PE) so that, when a protrusion (124a, 124b) of a first workpiece carrier (1) is inserted into an aperture (123a, 123b) of a second workpiece carrier (1), the first and the second workpiece carrier (1) can be positioned relative to each other so that the distance between their positioning planes (PE) is smaller than half the length (L) of a workpiece carrier (1) in a direction perpendicular to the positioning plane (PE).

3. The workpiece carrier (1) according to one of the preceding claims, **characterised in that** the contact element (12) includes at least two guide members (125a, 125b) which respectively comprise at least two guide points which are disposed on the outside of the contact element (12) in a direction perpendicular to the first moving direction (B1) , wherein connecting lines between the guide points of the guide members (125a, 125b) are oriented perpendicular to the positioning plane (PE) and spaced apart from each other in the direction parallel to the positioning plane (PE), wherein the guide members (125a, 125b), in the operation of the workpiece carrier (1), are provided to, at least temporarily or in sections, abut on a guide of a conveyer system.

4. The workpiece carrier (1) according to one of the preceding claims, **characterised in that** the contact element (12) includes a first segment (12a) and a second segment (12b) which are disposed adjacent to each other and connected to each other in a direction perpendicular to the contact surface (121), wherein the two segments (12a, 12b) have a substantially identical shape and size, wherein the two segments (12a, 12b) are differently positioned relative to the positioning plane (PE).

5. The workpiece carrier (1) according to claim 4, **characterised in that** the first segment (12a) is connected to the workpiece base (11), and the second segment (12b) is connected to the first segment (12a) on its side located opposite of the workpiece base (11), wherein the contact surface (121) is disposed on the second segment (12b) on its side located opposite of the first segment (12a).

6. The workpiece carrier (1) according to one of the claims 4 to 5, **characterised in that** at least one of the guide members (125a, 125b) is disposed on the first segment (12a) and at least one of the guide members (125a, 125b) is disposed on the second segment (12b), and/ or a first aperture (123a) and a first protrusion (124a) are disposed on or in the first segment (12a) and a second aperture (123b) and a second protrusion (124b) are disposed on or in the second segment (12b).

7. The workpiece carrier (1) according to one of the claims 4 to 6, **characterised in that,** in a plan view of the contact surface (121), the outer contour of each segment (12a, 12b) on a first side substantially corresponds to the outer contour of the segment (12a, 12b) on a second side located opposite of the first side, wherein the first side is located opposite of the second side in a direction perpendicular to the positioning plane (PE) and/or the contact element (12), in a perpendicular plan view of the contact surface (121), is formed so that it is symmetric to the positioning plane (PE) and/or, in a plan view of the contact surface (121), each segment (12a, 12b) is formed so that it is axially symmetric about an axis which is oriented perpendicular to the positioning plane (PE).

8. The workpiece carrier (1) according to one of the claims 4 to 7, **characterised in that,** in a plan view of the contact surface (121), each segment (12a, 12b) is formed in a V-shape, wherein particularly the two arms of the V are disposed at an angle of 5° to 150° relative to each other, wherein the free ends of the V respectively include a guide member (125a, 125b) on their front sides, wherein the guide members (125a, 125b) of the segments (12a, 12b) disposed adjacent to each other one above the other are flush with each other on each end of the contact element (12).

9. The workpiece carrier (1) according to one of the claims 4 to 8, **characterised in that,** in a plan view of the contact surface (121), each segment (12a, 12b), at least in sections, is formed in a V-shape, wherein an aperture (123a, 123b) is disposed between the arms of the V, and a protrusion (124a, 124b) is formed by the convex outer side of the tip of the V, wherein, in a plan view of the contact surface (121), each segment (12a, 12b) is formed in a V-shape, wherein the tips of the V of the two segments (12a, 12b) interconnecting its two arms are disposed on opposite sides of the positioning plane (PE), and the two segments (12a, 12b), in a plan view, are disposed about the positioning plane (PE) so that they are symmetric to each other.

10. The workpiece carrier (1) according to one of the claims 4 to 9, **characterised in that,** in a plan view of the contact surface (121), each segment (12a, 12b), at least in sections, is formed in a V-shape, wherein the outer surfaces of the segments (12a, 12b), at least in sections, are designed to be planar on two sides located opposite of each other perpendicular to the positioning plane (PE), wherein the two arms of the V are respectively oriented at an angle of 1° to 89°, preferably at the same angle, to the positioning plane (PE).

11. The workpiece carrier (1) according to one of claims 4 to 10, **characterised in that** a spacer element (13) is provided which is movably connected to the workpiece base (11), wherein the spacer element (13) is laterally disposed on the workpiece base (11) between the receiving surface (111) and the first segment (12a) of the contact element (12), and the spacer element (13) includes at least one aperture (131) which is incorporated in its side located opposite of the workpiece base (11) and which extends in a direction perpendicular to the positioning plane (PE) and parallel to the receiving surface (111), and at least one stopper (14) is provided which extends in a direction perpendicular to the positioning plane (PE) and parallel to the receiving surface (111), wherein the stopper (14) is mounted on the side of the workpiece base (11) located opposite of the spacer element (13) in a direction perpendicular to the positioning plane (PE) and wherein the stopper (14), at least in sections, has a size and shape which fits into the aperture (131) of the spacer element (13), wherein, in a first position of the spacer element (13) relative to the workpiece base (11), the aperture (131) is located opposite of and flush with the stopper (14) in a direction perpendicular to the positioning plane (PE) and, in a second position of the spacer element (13) relative to the workpiece base (11), the aperture (131) is not located opposite of and not flush with the stopper (14) in a direction perpendicular to the positioning plane (PE).

12. The workpiece carrier (1) according to claim 11, **characterised in that** the workpiece base (11) has the shape of a cuboid, wherein either
the spacer element (13) has an overall length which is larger than the overall length of the workpiece base (11) in a direction parallel to the positioning plane (PE) so that the spacer element (13) protrudes beyond the workpiece base (11) in a direction parallel to the positioning plane (PE),
or a cavity (113) which extends through the workpiece base (11) in a direction perpendicular to the positioning plane (PE) and which is open on the front side of the workpiece base (11) implemented as a cuboid in the direction of the positioning plane (PE) is disposed on at least one end in the direction of the positioning plane (PE), and the spacer element (13), in a view from the first moving direction (B1), is inserted into or overlaps at least one cavity (113) disposed on a front side of the workpiece base (11), wherein the spacer element (13) is shiftable in its position relative to the workpiece base (11) by inserting an object, particularly a blade of a conveyer system, into the cavity (113).

13. A conveyer system for transporting workpieces and/or goods comprising:
- a conveyer element which is provided to move a plurality of workpiece carriers (1) through the conveyer system, and wherein the conveyer element is drivable by a drive,
- a guide which confines the conveyer element on two opposite sides and which is provided to guide the workpiece carriers (1) which are moved by conveyer element, wherein the guide determines a guide direction at any location of the conveyer element,
- at least two workpiece carriers (1) according to one of the preceding claims,
wherein the contact surface (121) of each workpiece carrier (1) rests on the conveyer element and at least one guide member (125a, 125b) or at least one segment of a protrusion (124a, 124b), at least temporarily, abuts on the guide.

14. The conveyer system according to the preceding claim, **characterised in that** the workpiece carriers (1) are oriented parallel to the guide direction with their positioning plane (PE), and the two guide members (125a, 125b) of a first workpiece carrier (1) abut on the two guide members (125a, 125b) of a second workpiece carrier (1), or the workpiece base (11) of a first workpiece carrier (1) abuts on the workpiece base (11) of a second workpiece carrier (1), wherein the two workpiece carriers (1) do not overlap, wherein the two protrusions (124a, 124b) of the two workpiece carriers (1), at least temporarily, abut on the guide during the transport through the conveyer system (100) and/ or
the workpiece carriers (1) are oriented perpendicular to the guide direction with their positioning plane, and the workpiece carriers (1), in sections, overlap, wherein a protrusion (124a, 124b) of a first workpiece carrier (1) is inserted into the aperture (123a, 123b) of a second workpiece carrier (1), and a protrusion (124a, 124b) of the second workpiece carrier (1) is inserted into an aperture (123a, 123b) of the first workpiece carrier (1), wherein the guide members (125a, 125b) of each workpiece carrier (1), at least temporarily, abut on the guide during the transport through the conveyer system (100), wherein particularly the stopper (14) of the first workpiece carrier (1) abuts on the spacer element (13) of the second workpiece carrier (1).

15. A method for joining a plurality of workpieces using a conveyer system according to claim 13 or 14 comprising the steps of:
A) accumulating a plurality of workpiece carriers (1), wherein the positioning planes (PE) of the workpiece carriers (1) are oriented perpendicular to the guide direction for the accumulation, and the workpiece carriers (1) overlap each other, and the stopper (14) and the spacer element (13) of adjacent workpiece carriers (1) contact each other or separating of a plurality of workpiece carriers (1), wherein adjacent workpiece carriers (1) are spaced apart from each other and the positioning planes (PE) are oriented perpendicular or parallel to the guide direction,
B) applying a joining material, at least locally, to at least one workpiece,
C) pushing together the workpiece carriers (1), wherein the spacer elements (13) of the workpiece carriers (1) are adjusted so that the stoppers (14) are flush with the apertures (131) of the workpiece carriers (1) so that the workpieces contact each other via the joining material and are joined thereby, wherein particularly the workpiece carriers (1) are lifted off the conveyer element for performing process step B) and/or process step C).

## Revendications

1. Support de pièce à usiner (1) pour le transport d'une pièce à usiner ou une marchandise dans un transporteur, comprenant
- au moins une base de pièce à usiner (11) prévue pour la réception au moins d'une pièce à usiner, la base de pièce à usiner (11) présentant une surface de réception (111) sur laquelle une pièce à usiner est attachable et la base de pièce à usiner (11) présentant en outre une surface de base (112) disposée de manière écartée par rapport à la surface de réception (111),
- au moins un élément de support (12) prévu pour reposer sur un élément de transport d'un transporteur ayant une surface de support (121) pendant le fonctionnement du support de pièce à usiner (1), l'élément de support (12) étant connecté à la surface de base (112) de la base de pièce à usiner (11),
un premier sens de déplacement (B1) étant prévu pour le support de pièce à usiner (1), le long duquel le support de pièce à usiner (1) étant déplaçable dans un transporteur et un plan de positionnement (PE) étant défini, qui est orienté à la verticale par rapport à la surface de support (121) et à la verticale au premier sens de déplacement (B1), le plan de positionnement (PE) coupant la surface de repos (111) et étant disposé le long du premier sens de déplacement (B1) au centre de la longueur du support de pièce à usiner (1) et l'élément de support (12) présentant au moins deux évidements (123a, 123b), décalés l'un par rapport à l'autre dans un sens vertical par rapport à la surface de support (121) et l'élément de support (12) présentant au moins deux saillies (124a, 124b), disposées dans un sens vertical par rapport à la surface de support (121) en décalage l'une par rapport à l'autre, la saillie (124a) d'un support de pièce à usiner (1) disposée plus près de la base de pièce à usiner (11) dans un sens vertical par rapport au plan de positionnement (PE) est engageable dans un évidement (123a) d'un autre support de pièce à usiner (1) disposé plus près de la base de pièce à usiner (11) et la saillie (124b) d'un support de pièce à usiner (1) disposé verticalement par rapport à la surface de support (121) plus près de la surface de support (121) est engageable dans un sens vertical par rapport au plan de positionnement (PE) dans un évidement (123b) d'un autre support de pièce à usiner (1) disposé dans un sens vertical par rapport à la surface de support (121) plus près de la surface de support (121),
**caractérisé en ce que**
chacun des évidements (123a, 123b) s'étend au moins par régions sur deux côtés en regard du plan de positionnement (PE), notamment à travers le plan de positionnement (PE).

2. Support de pièce à usiner (1) selon la revendication 1, **caractérisé en ce que** chacun des évidements (123a, 123b) et chacune des saillies (124a, 124b) s'étendent au moins par régions sur deux côtés en regard du plan de positionnement (PE), de sorte que lors d'une introduction d'une saillie (124a, 124b) d'un premier support de pièce à usiner (1) dans un évidement (123a, 123b) d'un deuxième support de pièce à usiner (1), le premier et le deuxième support de pièce à usiner (1) sont positionnables l'un par rapport à l'autre de sorte, que l'écart entre leurs plans de positionnement (PE) est inférieur à la moitié de la longueur (L) d'un support de pièce à usiner (1) dans un sens vertical par rapport au plan de positionnement (PE).

3. Support de pièce à usiner (1) selon l'une des revendications précédentes, **caractérisé en ce que** l'élément de support (12) présente au moins deux éléments de guidage (125a, 125b), comprenant chacun au moins deux points de guidage, disposés dans un sens vertical par rapport au sens de déplacement (B1) extérieurement à l'élément de support (12), les lignes de connexion entre les points de guidage des éléments de guidage (125a, 125b) étant orientées verticalement par rapport au plan de positionnement (PE) et étant écartées l'une par rapport à l'autre parallèlement par rapport au plan de positionnement (PE), les éléments de guidage (125a, 125b) étant prévus pendant le fonctionnement du support de pièce à usiner (1) pour adhérer au moins temporairement ou par régions à un guidage d'un transporteur.

4. Support de pièce à usiner (1) selon l'une des revendications précédentes, **caractérisé en ce que** l'élément de support (12) présente une première sous-région (12a) et une deuxième sous-région (12b), disposées verticalement par rapport à la surface de support et avoisinantes et connectées l'une par rapport à l'autre, les deux sous-régions (12a, 12b) présentant essentiellement une forme et une taille identiques, les deux sous-régions (12a, 12b) étant positionnées différemment relativement au plan de positionnement (PE).

5. Support de pièce à usiner (1) selon la revendication 4, **caractérisé en ce que** la première région (12a) est connectée à la base de pièce à usiner (11) et que la deuxième sous-région (12b) est connectée à la première sous-région (12a) sur le côté en regard par rapport à la base de pièce à usiner (11), la surface de support (121) étant disposée à la deuxième sous-région (12b) sur son côté en regard à la première sous-région (12a).

6. Support de pièce à usiner (1) selon l'une des revendications 4 à 5, **caractérisé en ce qu'**au moins l'un des éléments de guidage (125a, 125b) est disposé à la première sous-région (12a) et qu'au moins l'un des éléments de guidage (125a, 125b) est disposé à la deuxième sous-région (12b) et/ou un premier évidement (123a) et une première saillie (124a) est disposé à la ou dans la première sous-région (12a) et un deuxième évidement (123b) et une deuxième saillie (124b) sont disposés à la ou dans la deuxième sous-région (12b).

7. Support de pièce à usiner (1) selon l'une des revendications 4 à 6, **caractérisé en ce que,** dans une vue de dessus sur la surface de support (121), le contour extérieur de chaque sous-région (12a, 12b) correspond sur un premier côté essentiellement au contour extérieur de la sous-région (12a, 12b) sur un deuxième côté, disposé en regard par rapport au premier côté, le premier côté étant en regard par rapport au deuxième côte dans un sens vertical par rapport au plan de positionnement (PE) et/ou l'élément de support (12) dans une vue de dessus étant formé verticalement sur la surface de support (121), symétriquement par rapport au plan de positionnement (PE) et/ou est exécuté dans une vue de dessus sur la surface de support (121) de chaque sous-région (12a, 12b) symétriquement par rapport à un axe, qui est orienté verticalement par rapport au plan de positionnement (PE).

8. Support de pièce à usiner (1) selon l'une des revendications 4 à 7, **caractérisé en ce que,** dans une vue de dessus sur la surface de support (121), chaque sous-région (12a, 12b) est formée en V, les deux branches du V étant notamment disposées dans un angle entre 5° et 150° l'une par rapport à l'autre, les extrémités libres du V présentant sur leurs faces frontales respectivement un élément de guidage (125a, 125b), les éléments de guidage (125a, 125b) des sous-régions (12a, 12b) disposées de manière avoisinante et superposée l'une par rapporte à l'autre étant alignés à chaque extrémité de l'élément de support (12).

9. Support de pièce à usiner (1) selon l'une des revendications 4 à 8, **caractérisé en ce que,** dans une vue de dessus sur la surface de support (121), chaque sous-région (12a, 12b) est formée en V au moins par régions, un évidement (123a, 123b) étant disposé entre les branches du V et une saillie (124a, 124b) est formée par le côté extérieur convexe de la pointe du V, chaque sous-région (12a, 12b) étant formée en V dans une vue de dessus sur la surface de support (121), les pointes du V des deux sous-régions (12a, 12b) connectant ses deux branches l'une à l'autre, étant disposées sur des côtés en regard l'un par rapport à l'autre du plan de positionnement (PE) et les deux sous-régions (12a, 12b) étant disposées symétriquement l'une par rapport à l'autre autour du plan de positionnement (PE) dans une vue de dessus.

10. Support de pièce à usiner (1) selon l'une des revendications 4 à 9, **caractérisé en ce que,** dans une vue de dessus sur la surface de support (121), chaque sous-région (12a, 12b) est formée en V au moins par régions, les faces extérieures des sous-régions (12a, 12b) étant exécutées sur deux côtés en regard verticalement l'une par rapport à l'autre aux plans de positionnement (PE) au moins par régions, les deux branches du V étant orientées chacune dans un angle entre 1° et 89°, de préférence dans le même angle, par rapport au plan de positionnement (PE).

11. Support de pièce à usiner (1) selon l'une des revendications 4 à 10, **caractérisé en ce qu'**un élément d'écartement (13) est prévu, qui est connecté de manière amovible a la base de pièce à usiner (11), l'élément d'écartement (13) étant disposé latéralement a la base de pièce à usiner (11) entre la surface de support (111) et la première sous-région (12a) de l'élément d'écartement (12) et que l'élément d'écartement (13) présentant au moins un évidement (131), qui est engagé dans son côté en regard par rapport a la base de pièce à usiner (11) et qui s'étend dans un sens vertical par rapport au plan de positionnement (PE) et parallèle à la surface de support (111) et au moins une butée (14) est prévue, qui s'étend dans un sens vertical par rapport au plan de positionnement (PE) et parallèle à la surface de support, la butée (14) étant attachée au côté de la base de pièce à usiner (11) en regard de l'élément d'écartement (13) vertical dans un sens par rapport au plan de positionnement (PE) et la butée (14) présentant au moins par régions une taille et une forme entrant dans l'évidement (131) de l'élément d'écartement (13), dans une première position de l'élément d'écartement (13) relativement a la base de pièce à usiner (11), l'évidement (131) étant dans un sens vertical par rapport au plan de positionnement (PE) en regard par rapport à la butée (14) et est alignée avec celle-ci et dans une deuxième position de l'élément d'écartement (13) relativement a la base de pièce à usiner (11), l'évidement (131) n'est dans un sens vertical par rapport au plan de positionnement (PE) pas en regard par rapport à la butée (14) et n'est pas alignée avec celle-ci.

12. Support de pièce à aligner (1) selon la revendication 11, **caractérisé en ce que** la base de pièce à usiner (11) présente la forme d'un parallélépipède, où soit l'élément d'écartement (13) présente, dans un sens parallèle par rapport au plan de positionnement (PE), une longueur totale supérieure à la longueur totale de la base de pièce à usiner (11), de sorte que l'élément d'écartement (13) saillit dans un sens parallèle par rapport au plan de positionnement (PE) au-delà la base de pièce à usiner (11), soit à au moins à une extrémité, une cavité (113) est disposée dans le sens du plan de positionnement (PE) pénétrant la base de pièce à usiner (11) dans un sens vertical par rapport au plan de positionnement (PE) et qui est ouverte dans le sens du plan de positionnement (PE) sur la face frontale de la base de pièce à usiner (11) exécutée en parallélépipède et l'élément d'écartement (13), dans une vue, venant du premier sens de déplacement (B1), s'introduisant au moins dans une cavité (113) disposée sur une face frontale de la base de pièce à usiner (11) ou chevauchant ce dernier, l'élément d'écartement (13) étant déplaçable dans sa position relativement par rapport a la base de pièce à usiner (11) par l'engagement d'un objet, notamment d'une lame d'un transporteur, dans la cavité (113).

13. Transporteur pour le transport de pièces à usiner et/ou de marchandises, comprenant
- un élément de transport prévu pour déplacer plusieurs supports de pièce à usiner (1) à travers le transporteur et où l'élément de transport étant actionnable par un entraînement,
- un guidage limitant l'élément de transport sur deux côtés en regard l'un par rapport à l'autre et prévu pour guider les pièces à usiner (1) déplacés par l'élément de transport, le guidage imposant un sens de guidage à chaque endroit de l'élément de guidage,
- au moins deux supports de pièce à usiner (1) selon l'une des revendications précédentes, la surface de support (121) de chaque support de pièce à usiner (1) reposant sur l'élément de transport et au moins un élément de guidage (125a, 125b) ou au moins une sous-région d'une saillie (124a, 124b) étant adjacente au guidage au moins temporairement.

14. Transporteur selon l'une des revendications précédentes, **caractérisé en ce que** les supports de pièce à usiner (1) sont orientés avec leur plan de positionnement (PE) parallèlement au sens de guidage et que les deux éléments de guidage (125a, 125b) d'un premier support de pièce à usiner (1) sont adjacents aux deux éléments de guidage (125a, 125b) d'un deuxième support de pièce à usiner (1) ou la base de pièce à usiner (11) d'un premier support de pièce à usiner (11) est adjacente à la base de pièce à usiner (11) d'un deuxième support de pièce à usiner (1), les deux supports de pièce à usiner (1) ne se chevauchant pas, les deux saillies (124a, 124b) des deux supports de pièce à usiner (1) étant au moins temporairement adjacents au guidage pendant le transport par le transporteur (100), et/ou
les supports de pièce à usiner (1) étant orientés verticalement avec leur plan de positionnement par rapport au sens de guidage et les supports de pièce à usiner (1) se chevauchant par régions, une saillie (124a, 124b) d'un premier support de pièce à usiner (1) saillant dans l'évidement (123a, 123b) d'un deuxième support de pièce à usiner (1) et une saillie (124a, 124b) du deuxième support de pièce à usiner (1) saillant dans un évidement (123a, 123b) du premier support de pièce à usiner (1), les éléments de guidage (125a, 125b) de chaque support de pièce à usiner (1) étant adjacents au guidage au moins temporairement pendant le transport par le transporteur (100), la butée (14) du premier support de pièce à usiner (1) étant notamment adjacente à l'élément d'écartement (13) du deuxième support de pièce à usiner (1).

15. Procédé pour assembler plusieurs pièces à usiner en utilisant un transporteur selon la revendication 13 ou 14, comprenant les étapes
A) Accumuler plusieurs pièces à usiner (1), les plans de positionnement (PE) des supports de pièce à usiner (1) étant orientés à la verticale par rapport au sens de guidage en vue de l'accumulation et les pièces à usiner (1) se chevauchant les unes par rapport aux autres et la butée (14) et l'élément d'écartement (13) de supports de pièce à usiner (1) avoisinants se touchant ou déparier plusieurs supports de pièce à usiner (1), des supports de pièce à usiner (1) avoisinants présentant un écart les uns par rapport aux autres et les plans de positionnement (PE) étant orientés verticalement ou parallèlement par rapport au sens de guidage,
B) Appliquer du matériau d'assemblage au moins par régions au moins sur une pièce à usiner,
C) Rapprocher les supports de pièce à usiner (1), les éléments d'écartement (13) des supports de pièce à usiner (1) étant décalés de sorte que les butées (14) s'alignent aux évidements (131) des supports de pièce à usiner (1), de sort que les pièces à usiner se touchent à travers le matériau d'assemblage et devenant ainsi malléables, les supports de pièce à usiner (1) étant notamment retirés de l'élément de transport en vue de réaliser l'étape B) du procédé et/ou l'étape C) du procédé.
